(19) Europäisches Patentamt
European Patent Office
Office européen des brevets

(11) EP 4 597 194 A1

(12) **EUROPEAN PATENT APPLICATION**
published in accordance with Art. 153(4) EPC

(43) Date of publication:
06.08.2025 Bulletin 2025/32

(21) Application number: 23880186.4

(22) Date of filing: 17.10.2023

(51) International Patent Classification (IPC):
G02B 15/14 (2006.01)    G02B 13/00 (2006.01)
G02B 13/18 (2006.01)

(52) Cooperative Patent Classification (CPC):
G02B 13/00; G02B 13/18; G02B 15/14

(86) International application number:
PCT/KR2023/016071

(87) International publication number:
WO 2024/085609 (25.04.2024 Gazette 2024/17)

(84) Designated Contracting States:
AL AT BE BG CH CY CZ DE DK EE ES FI FR GB
GR HR HU IE IS IT LI LT LU LV MC ME MK MT NL
NO PL PT RO RS SE SI SK SM TR
Designated Extension States:
BA
Designated Validation States:
KH MA MD TN

(30) Priority: 17.10.2022 KR 20220133273
31.10.2022 KR 20220143097

(71) Applicant: Samsung Electronics Co., Ltd.
Suwon-si, Gyeonggi-do 16677 (KR)

(72) Inventors:
• LEE, Hwanseon
Suwon-si Gyeonggi-do 16677 (KR)
• KIM, Haneung
Suwon-si Gyeonggi-do 16677 (KR)

(74) Representative: HGF
HGF Limited
1 City Walk
Leeds LS11 9DX (GB)

(54) **LENS ASSEMBLY AND ELECTRONIC DEVICE COMPRISING SAME**

(57) A lens assembly, according to one embodiment of the present disclosure, comprises: an image sensor (IS); a first lens group (G1) which is arranged to be the first on a object-side among three lens groups (G1, G2, G3) which are sequentially arranged along an optical-axis direction from the object-side to the image sensor-side, the first lens group comprising a plurality of lenses and having a negative power; a second lens group (G2) which, among the three lens groups, is arranged between the first lens group and the image sensor so as to be capable of back-and-forth movement along the optical-axis direction, the second lens group comprising a plurality of lenses and having a positive power; and a third lens group (G3) which, among the three lens groups, is arranged between the second lens group and the image sensor, the third lens group having a positive power, wherein, when the lens assembly is in a zooming operation, the first lens group and the second lens group move in the direction in which the interval therebetween is reduced, with the third lens group being static. Other various embodiments are possible.

FIG. 7

# EP 4 597 194 A1

**Description**

[Technical Field]

Various embodiments of the disclosure relate to an electronic device, e.g., a lens assembly and an electronic device including the same.

[Background Art]

Lens assemblies, for example, cameras capable of capturing images or videos have been widely used, and digital cameras or video cameras with solid image sensors such as charge coupled device (CCD) or complementary metal-oxide semiconductor (CMOS) have recently become commonplace. Solid image sensor (CCD or CMOS)-adopted lens assemblies may easily save, copy, or move, between electronic devices, images as compared with film-type lens assemblies and have thus been replacing film-type lens assemblies.

Recently, a plurality of lens assemblies, e.g., two or more selected from a macro camera, a telephoto camera, and/or a wide-angle camera, are built in one electronic device to enhance the quality of shot images and give various visual effects to shot images. For example, it is possible to obtain images of an object with multiple cameras having different optical properties and synthesize the images to obtain a high-quality shot image. As equipped with a plurality of lens assemblies (e.g., cameras) to obtain high-quality images, electronic devices, such as mobile communication terminals or smartphones, are gradually replacing dedicated capturing devices, such as digital cameras.

The electronic device, made lighter and/or more compact for everyday carrying and use, may encounter difficulty in enhancing the performance of the camera or lens assembly. For example, although image quality is enhanced by combining a plurality of lens assemblies, it is still hard to pack the compact and/or lightweight electronic device with the telescopic or zoom function due to its small space.

The above-described information may be provided as background for the purpose of helping understanding of the disclosure. No claim or determination is made as to whether any of the foregoing is applicable as background art in relation to the disclosure.

[Detailed Description of the Invention]

[Technical Solution]

According to an embodiment of the disclosure, a lens assembly may comprise an image sensor, a first lens group disposed first from a object-side among three lens groups sequentially arranged from the object-side to the image sensor-side along an optical-axis direction, the first lens group including a plurality of lenses and having a negative refractive power, a second lens group disposed to move back and forth along the optical-axis direction between the first lens group among the three lens groups and the image sensor, the second lens group including a plurality of lenses and having a positive refractive power, and a third lens group disposed between the second lens group among the three lens groups and the image sensor, the third lens group having a positive refractive power. When the lens assembly is in a zooming operation, the lens assembly is configured such that an gap between the first lens group and the second lens group is reduced, and the third lens group is fixed.

[Brief Description of the Drawings]

The foregoing and other aspects, configurations, and/or advantages of an embodiment of the disclosure will be more apparent from the following detailed description taken in conjunction with the accompanying drawings.

FIG. 1 is a block diagram illustrating an electronic device in a network environment according to an embodiment;

FIG. 2 is a front perspective view illustrating an electronic device according to an embodiment of the disclosure;

FIG. 3 is a rear perspective view illustrating the electronic device of FIG. 2;

FIG. 4 is an exploded perspective view illustrating the electronic device of FIG. 2;

FIG. 5 is a rear plan view illustrating an electronic device according to an embodiment of the disclosure;

FIG. 6 is a cross-sectional view illustrating a portion of an electronic device, taken along line A-A' of FIG. 5;

FIG. 7 is a view illustrating a lens assembly according to an embodiment of the disclosure;

FIG. 8 is a view illustrating a configuration of a lens assembly, illustrating a lens (group) array at a wide-angle zoom, a mid-range zoom, and a telephoto zoom according to an embodiment of the disclosure;

FIG. 9A is a graph illustrating spherical aberration of a lens assembly having the lens (group) array at the wide-angle zoom of FIG. 8;

FIG. 9B is a graph illustrating astigmatism of a lens assembly having the lens (group) array at the wide-angle zoom of FIG. 8;

FIG. 9C is a graph illustrating the distortion ratio of a lens assembly having the lens (group) array at the wide-angle zoom of FIG. 8;

FIG. 10A is a graph illustrating spherical aberration of a lens assembly having the lens (group) array at the mid-range zoom of FIG. 8;

FIG. 10B is a graph illustrating astigmatism of a lens assembly having the lens (group) array at the mid-range zoom of FIG. 8;

FIG. 10C is a graph illustrating the distortion ratio of a lens assembly having the lens (group) array at the mid-range zoom of FIG. 8;

FIG. 11A is a graph illustrating spherical aberration of a lens assembly having the lens (group) array at the telephoto zoom of FIG. 8;

FIG. 11B is a graph illustrating astigmatism of a lens assembly having the lens (group) array at the telephoto zoom of FIG. 8;

FIG. 11C is a graph illustrating the distortion ratio of a lens assembly having the lens (group) array at the telephoto zoom of FIG. 8;

FIG. 12 is a view illustrating a configuration of a lens assembly, illustrating a lens (group) array at a wide-angle zoom, a mid-range zoom, and a telephoto zoom according to an embodiment of the disclosure;

FIG. 13A is a graph illustrating spherical aberration of a lens assembly having the lens (group) array at the wide-angle zoom of FIG. 12;

FIG. 13B is a graph illustrating astigmatism of a lens assembly having the lens (group) array at the wide-angle zoom of FIG. 12;

FIG. 13C is a graph illustrating the distortion ratio of a lens assembly having the lens (group) array at the wide-angle zoom of FIG. 12;

FIG. 14A is a graph illustrating spherical aberration of a lens assembly having the lens (group) array at the mid-range zoom of FIG. 12;

FIG. 14B is a graph illustrating astigmatism of a lens assembly having the lens (group) array at the mid-range zoom of FIG. 12;

FIG. 14C is a graph illustrating the distortion ratio of a lens assembly having the lens (group) array at the mid-range zoom of FIG. 12;

FIG. 15A is a graph illustrating spherical aberration of a lens assembly having the lens (group) array at the telephoto zoom of FIG. 12;

FIG. 15B is a graph illustrating astigmatism of a lens assembly having the lens (group) array at the telephoto zoom of FIG. 12;

FIG. 15C is a graph illustrating the distortion ratio of a lens assembly having the lens (group) array at the telephoto zoom of FIG. 12;

FIG. 16 is a view illustrating a configuration of a lens assembly, illustrating a lens (group) array at a wide-angle zoom, a mid-range zoom, and a telephoto zoom according to an embodiment of the disclosure;

FIG. 17A is a graph illustrating spherical aberration of a lens assembly having the lens (group) array at the wide-angle zoom of FIG. 16;

FIG. 17B is a graph illustrating astigmatism of a lens assembly having the lens (group) array at the wide-angle zoom of FIG. 16;

FIG. 17C is a graph illustrating the distortion ratio of a lens assembly having the lens (group) array at the wide-angle zoom of FIG. 16;

FIG. 18A is a graph illustrating spherical aberration of a lens assembly having the lens (group) array at the mid-range zoom of FIG. 16;

FIG. 18B is a graph illustrating astigmatism of a lens assembly having the lens (group) array at the mid-range zoom of FIG. 16;

FIG. 18C is a graph illustrating the distortion ratio of a lens assembly having the lens (group) array at the mid-range zoom of FIG. 16;

FIG. 19A is a graph illustrating spherical aberration of a lens assembly having the lens (group) array at the telephoto zoom of FIG. 16;

FIG. 19B is a graph illustrating astigmatism of a lens assembly having the lens (group) array at the telephoto zoom of FIG. 16;

FIG. 19C is a graph illustrating the distortion ratio of a lens assembly having the lens (group) array at the telephoto zoom of FIG. 16;

FIG. 20 is a view illustrating a configuration of a lens assembly, illustrating a lens (group) array at a wide-angle zoom, a mid-range zoom, and a telephoto zoom according to an embodiment of the disclosure;

FIG. 21A is a graph illustrating spherical aberration of a lens assembly having the lens (group) array at the wide-angle zoom of FIG. 20;

FIG. 21B is a graph illustrating astigmatism of a lens assembly having the lens (group) array at the wide-angle zoom of FIG. 20;

FIG. 21C is a graph illustrating the distortion ratio of a lens assembly having the lens (group) array at the wide-angle zoom of FIG. 20;

FIG. 22A is a graph illustrating spherical aberration of a lens assembly having the lens (group) array at the mid-range zoom of FIG. 20;

FIG. 22B is a graph illustrating astigmatism of a lens assembly having the lens (group) array at the mid-range zoom of FIG. 20;

FIG. 22C is a graph illustrating the distortion ratio of a lens assembly having the lens (group) array at the mid-range zoom of FIG. 20;

FIG. 23A is a graph illustrating spherical aberration of a lens assembly having the lens (group) array at the telephoto zoom of FIG. 20;

FIG. 23B is a graph illustrating astigmatism of a lens assembly having the lens (group) array at the telephoto zoom of FIG. 20; and

FIG. 23C is a graph illustrating the distortion ratio of a lens assembly having the lens (group) array at the telephoto zoom of FIG. 20.

Throughout the drawings, like reference numerals may be assigned to like parts, components, and/or structures.

[Mode for Carrying out the Invention]

According to an embodiment, there is disclosed a lens assembly in which a first lens group is fixed, and a second lens group and a third lens group are moved to the object-side during zooming. In this case, when configuring a continuous zoom of about 2x to 3x zoom magnification, the maximum movement amount (stroke) of the second and third lens groups is long, and the magnification of the third lens group that performs AF according to the object distance is large, resulting in high AF sensitivity.

According to an embodiment, there is disclosed a lens assembly in which a third lens group is fixed, and a first lens group and a second lens group are moved to the object-side during zooming. In this case, it is difficult to correct optical distortion at the wide-angle zoom, the outer diameter of the first lens group may be excessively large, or the movement amounts of the first and second lens groups may be large during zooming. Precise optical design is required to address such issues.

Various embodiments of the disclosure aim to address the foregoing issues and/or drawbacks and provide advantages described below, providing a lens assembly, which has a reduced size while implementing the zoom function, and/or an electronic device including the same.

Other aspects according to an embodiment will be suggested through in the following detailed description and would be partially apparent from the description or appreciated through the suggested embodiments.

The following description taken in conjunction with the accompanying drawings may be presented to provide a comprehensive understanding of various implementations of the disclosure as defined by the claims and equivalents thereto. The specific embodiments disclosed in the following description entail various specific details to aid understanding, but are regarded as one of various embodiments. Accordingly, it will be apparent to those skilled in the art that various changes and modifications may be made to the various implementations described in the disclosure without departing from the scope and spirit of the disclosure. Further, descriptions of well-known functions and configurations may be omitted for clarity and brevity.

The terms and words used in the following description and claims are not limited to the bibliographical meaning, but may be used to clearly and consistently describe the various embodiments of the disclosure. Therefore, it will be apparent to those skilled in the art that the following description of various implementations of the disclosure is provided only for the purpose of description, not for the purpose of limiting the disclosure defined as the scope of the claims and equivalent thereto.

The singular forms "a," "an," and "the" are intended to include the plural forms as well, unless the context clearly indicates otherwise. Thus, as an example, "a component surface" may have a meaning including one or more of the surfaces of a component.

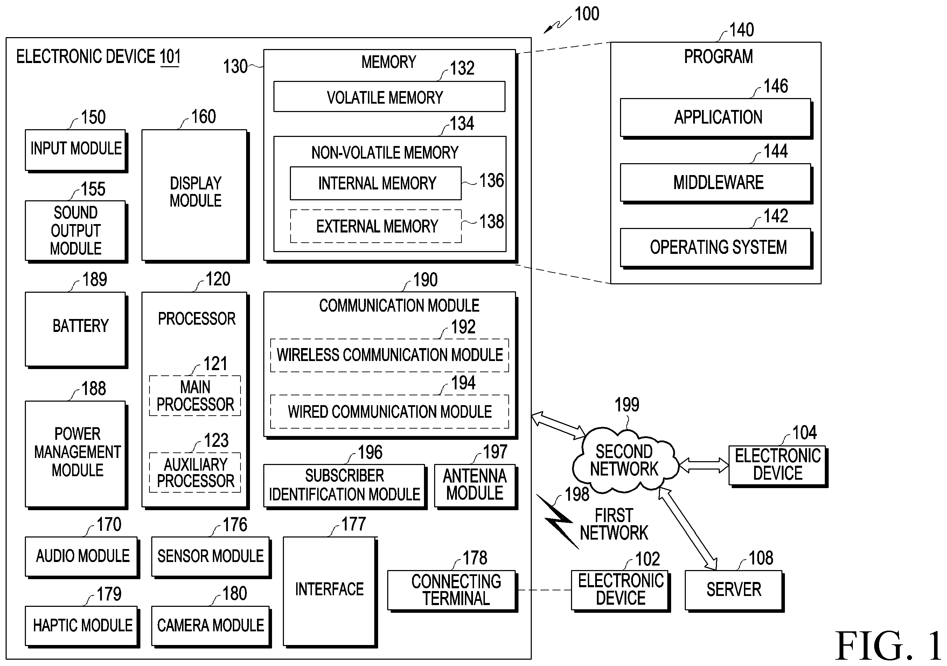

FIG. 1 is a block diagram illustrating an electronic device 101 in a network environment 100 according to various embodiments. Referring to FIG. 1, the electronic device 101 in the network environment 100 may communicate with at least one of an electronic device 102 via a first network 198 (e.g., a short-range wireless communication network), or an electronic device 104 or a server 108 via a second network 199 (e.g., a long-range wireless communication network). According to an embodiment, the electronic device 101 may communicate with the electronic device 104 via the server 108. According to an embodiment, the electronic device 101 may include a processor 120, memory 130, an input module 150, a sound output module 155, a display module 160, an audio module 170, a sensor module 176, an interface 177, a connecting terminal 178, a haptic module 179, a camera module 180, a power management module 188, a battery 189, a communication module 190, a subscriber identification module (SIM) 196, or an antenna module 197. In an embodiment, at least one (e.g., the connecting terminal 178) of the components may be omitted from the electronic device 101, or one or more other components may be added in the electronic device 101. According to an embodiment, some (e.g., the sensor module 176, the camera module 180, or the antenna module 197) of the components may be integrated into a single component (e.g., the display module 160).

The processor 120 may execute, for example, software (e.g., a program 140) to control at least one other component (e.g., a hardware or software component) of the electronic device 101 coupled with the processor 120, and may perform various data processing or computation. According to an embodiment, as at least part of the data processing or computation, the processor 120 may store a command or data received from another component (e.g., the sensor module 176 or the communication module 190) in volatile memory 132, process the command or the data stored in the volatile memory 132, and store resulting data in non-volatile memory 134. According to an embodiment, the processor 120 may include a main processor 121 (e.g., a central processing unit (CPU) or an application processor (AP)), or an auxiliary processor 123 (e.g., a graphics processing unit (GPU), a neural processing unit (NPU), an image signal processor (ISP), a sensor hub processor, or a communication processor (CP)) that is operable independently from, or in conjunction with, the main processor 121. For example, when the electronic device 101 includes the main processor 121 and the auxiliary processor 123, the auxiliary processor 123 may be configured to use lower power than the main processor 121 or to be specified for a designated function. The auxiliary processor 123 may be implemented as separate from, or as part of the main processor 121.

The auxiliary processor 123 may control at least some of functions or states related to at least one component (e.g., the display module 160, the sensor module 176, or the communication module 190) among the components of the electronic device 101, instead of the main processor 121 while the main processor 121 is in an inactive (e.g., sleep) state, or together with the main processor 121 while the main processor 121 is in an active state (e.g., executing an application). According to an embodiment, the auxiliary processor 123 (e.g., an image signal processor or a communication processor) may be implemented as part of another component (e.g., the camera module 180 or the communication module 190) functionally related to the auxiliary processor 123. According to an embodiment, the auxiliary processor 123 (e.g., the neural processing unit) may include a hardware structure specified for artificial intelligence model processing. The artificial intelligence model may be generated via machine learning. Such learning may be performed, e.g., by the electronic device 101 where the artificial intelligence is performed or via a separate server (e.g., the server 108). Learning algorithms may include, but are not limited to, e.g., supervised learning, unsupervised learning, semi-supervised learning, or reinforcement learning. The artificial intelligence model may include a plurality of artificial neural network layers. The artificial neural network may be a deep neural network (DNN), a convolutional neural network (CNN), a recurrent neural network (RNN), a restricted Boltzmann machine (RBM), a deep belief network (DBN), a bidirectional recurrent deep neural network (BRDNN), deep Q-network or a combination of two or more thereof but is not limited thereto. The artificial intelligence model may, additionally or alternatively, include a software structure other than the hardware structure.

The memory 130 may store various data used by at least one component (e.g., the processor 120 or the sensor module 176) of the electronic device 101. The various data may include, for example, software (e.g., the program 140) and input data or output data for a command related thereto. The memory 130 may include the volatile memory 132 or the non-volatile memory 134.

The program 140 may be stored in the memory 130 as software, and may include, for example, an operating system (OS) 142, middleware 144, or an application 146.

The input module 150 may receive a command or data to be used by other component (e.g., the processor 120) of the electronic device 101, from the outside (e.g., a user) of the electronic device 101. The input module 150 may include, for example, a microphone, a mouse, a keyboard, keys (e.g., buttons), or a digital pen (e.g., a stylus pen).

The sound output module 155 may output sound signals to the outside of the electronic device 101. The sound output module 155 may include, for example, a speaker or a receiver. The speaker may be used for general purposes, such as playing multimedia or playing record. The receiver may be used for receiving incoming calls. According to an embodiment, the receiver may be implemented as separate from, or as part of the speaker.

The display module 160 may visually provide information to the outside (e.g., a user) of the electronic device 101. The display 160 may include, for example, a display, a hologram device, or a projector and control circuitry to control a corresponding one of the display, hologram device, and projector. According to an embodiment, the display 160 may include a touch sensor configured to detect a touch, or a pressure sensor configured to measure the intensity of a force generated by the touch.

The audio module 170 may convert a sound into an electrical signal and vice versa. According to an embodiment, the audio module 170 may obtain the sound via the input module 150, or output the sound via the sound output module 155 or a headphone of an external electronic device (e.g., an electronic device 102) directly (e.g., wiredly) or wirelessly coupled with the electronic device 101.

The sensor module 176 may detect an operational state (e.g., power or temperature) of the electronic device 101 or an environmental state (e.g., a state of a user) external to the electronic device 101, and then generate an electrical signal or data value corresponding to the detected state. According to an embodiment, the sensor module 176 may include, for example, a gesture sensor, a gyro sensor, an atmospheric pressure sensor, a magnetic sensor, an accelerometer, a grip sensor, a proximity sensor, a color sensor, an infrared (IR) sensor, a biometric sensor, a temperature sensor, a humidity sensor, or an illuminance sensor.

The interface 177 may support one or more specified protocols to be used for the electronic device 101 to be coupled with the external electronic device (e.g., the electronic device 102) directly (e.g., wiredly) or wirelessly. According to an embodiment, the interface 177 may include, for example, a high definition multimedia interface (HDMI), a universal serial bus (USB) interface, a secure digital (SD) card interface, or an audio interface.

A connecting terminal 178 may include a connector via which the electronic device 101 may be physically connected with the external electronic device (e.g., the electronic device 102). According to an embodiment, the connecting terminal 178 may include, for example, an HDMI connector, a USB connector, an SD card connector, or an audio connector (e.g., a headphone connector).

The haptic module 179 may convert an electrical signal into a mechanical stimulus (e.g., a vibration or motion) or electrical stimulus which may be recognized by a user via his tactile sensation or kinesthetic sensation. According to an embodiment, the haptic module 179 may include, for example, a motor, a piezoelectric element, or an electric stimulator.

The camera module 180 may capture a still image or moving images. According to an embodiment, the camera module 180 may include one or more lenses, image sensors, image signal processors, or flashes.

The power management module 188 may manage power supplied to the electronic device 101. According to an embodiment, the power management module 188 may be implemented as at least part of, for example, a power management integrated circuit (PMIC).

The battery 189 may supply power to at least one component of the electronic device 101. According to an embodiment, the battery 189 may include, for example, a primary cell which is not rechargeable, a secondary cell which is rechargeable, or a fuel cell.

The communication module 190 may support establishing a direct (e.g., wired) communication channel or a wireless communication channel between the electronic device 101 and the external electronic device (e.g., the electronic device 102, the electronic device 104, or the server 108) and performing communication via the established communication channel. The communication module 190 may include one or more communication processors that are operable independently from the processor 120 (e.g., the application processor (AP)) and supports a direct (e.g., wired) communication or a wireless communication. According to an embodiment, the communication module 190 may include a wireless communication module 192 (e.g., a cellular communication module, a short-range wireless communication module, or a global navigation satellite system (GNSS) communication module) or a wired communication module 194 (e.g., a local area network (LAN) communication module or a power line communication (PLC) module). A corresponding one of these communication modules may communicate with the external electronic device via a first network 198 (e.g., a short-range communication network, such as Bluetooth™, wireless-fidelity (Wi-Fi) direct, or infrared data association (IrDA)) or a second network 199 (e.g., a long-range communication network, such as a legacy cellular network, a 5G network, a next-generation communication network, the Internet, or a computer network (e.g., local area network (LAN) or wide area network (WAN)). These various types of communication modules may be implemented as a single component (e.g., a single chip), or may be implemented as multi components (e.g., multi chips) separate from each other. The wireless communication module 192 may identify or authenticate the electronic device 101 in a communication network, such as the first network 198 or the second network 199, using subscriber information (e.g., international mobile subscriber identity (IMSI)) stored in the subscriber identification module 196.

The wireless communication module 192 may support a 5G network, after a 4G network, and next-generation communication technology, e.g., new radio (NR) access technology. The NR access technology may support enhanced mobile broadband (eMBB), massive machine type communications (mMTC), or ultra-reliable and low-latency communications (URLLC). The wireless communication module 192 may support a high-frequency band (e.g., the mmWave band) to achieve, e.g., a high data transmission rate. The wireless communication module 192 may support various technologies for securing performance on a high-frequency band, such as, e.g., beamforming, massive multiple-input and multiple-output (massive MIMO), full dimensional MIMO (FD-MIMO), array antenna, analog beam-forming, or large scale antenna. The wireless communication module 192 may support various requirements specified in the electronic device 101, an external electronic device (e.g., the electronic device 104), or a network system (e.g., the second network 199). According to an embodiment, the wireless communication module 192 may support a peak data rate (e.g., 20Gbps or more) for implementing eMBB, loss coverage (e.g., 164dB or less) for implementing mMTC, or U-plane latency (e.g., 0.5ms or less for each of downlink (DL) and uplink (UL), or a round trip of 1ms or less) for implementing URLLC.

The antenna module 197 may transmit or receive a signal or power to or from the outside (e.g., the external electronic device). According to an embodiment, the antenna module may include an antenna including a radiator formed of a conductor or conductive pattern formed on a substrate (e.g., a printed circuit board (PCB)). According to an embodiment, the antenna module 197 may include a plurality of antennas (e.g., an antenna array). In this case, at least one antenna appropriate for a communication scheme used in a communication network, such as the first network 198 or the second network 199, may be selected from the plurality of antennas by, e.g., the communication module 190. The signal or the power may then be transmitted or received between the communication module 190 and the external electronic device via the selected at least one antenna. According to an embodiment, other parts (e.g., radio frequency integrated circuit (RFIC)) than the radiator may be further formed as part of the antenna module 197.

According to an embodiment, the antenna module 197 may form a mmWave antenna module. According to an embodiment, the mmWave antenna module may include a printed circuit board, a RFIC disposed on a first surface (e.g., the bottom surface) of the printed circuit board, or adjacent to the first surface and capable of supporting a designated high-frequency band (e.g., the mmWave band), and a plurality of antennas (e.g., array antennas) disposed on a second surface (e.g., the top or a side surface) of the printed circuit board, or adjacent to the second surface and capable of transmitting or receiving signals of the designated high-frequency band.

At least some of the above-described components may be coupled mutually and communicate signals (e.g.,

commands or data) therebetween via an inter-peripheral communication scheme (e.g., a bus, general purpose input and output (GPIO), serial peripheral interface (SPI), or mobile industry processor interface (MIPI)).

According to an embodiment, commands or data may be transmitted or received between the electronic device 101 and the external electronic device 104 via the server 108 coupled with the second network 199. The external electronic devices 102 or 104 each may be a device of the same or a different type from the electronic device 101. According to an embodiment, all or some of operations to be executed at the electronic device 101 may be executed at one or more of the external electronic devices 102, 104, or 108. For example, if the electronic device 101 should perform a function or a service automatically, or in response to a request from a user or another device, the electronic device 101, instead of, or in addition to, executing the function or the service, may request the one or more external electronic devices to perform at least part of the function or the service. The one or more external electronic devices receiving the request may perform the at least part of the function or the service requested, or an additional function or an additional service related to the request, and transfer an outcome of the performing to the electronic device 101. The electronic device 101 may provide the outcome, with or without further processing of the outcome, as at least part of a reply to the request. To that end, a cloud computing, distributed computing, mobile edge computing (MEC), or client-server computing technology may be used, for example. The electronic device 101 may provide ultra low-latency services using, e.g., distributed computing or mobile edge computing. In another embodiment, the external electronic device 104 may include an Internet-of-things (IoT) device. The server 108 may be an intelligent server using machine learning and/or a neural network. According to an embodiment, the external electronic device 104 or the server 108 may be included in the second network 199. The electronic device 101 may be applied to intelligent services (e.g., smart home, smart city, smart car, or health-care) based on 5G communication technology or IoT-related technology.

According to an embodiment of the disclosure, an electronic device may be configured to comprise a plurality of antennas, at least one antenna tuning circuit connected to at least one antenna among the plurality of antennas, an RF circuit connected to the at least one antenna tuning circuit, and at least one communication processor operatively connected to the RF circuit. The electronic devices may include, for example, a portable communication device (e.g., a smartphone), a computer device, a portable multimedia device, a portable medical device, a camera, a wearable device, or a home appliance. The electronic devices according to an embodiment are not limited to those described above.

It should be appreciated that various embodiments of the disclosure and the terms used therein are not intended to limit the technological features set forth herein to particular embodiments and include various changes, equivalents, or replacements for a corresponding embodiment. With regard to the description of the drawings, similar reference numerals may be used to refer to similar or related elements. It is to be understood that a singular form of a noun corresponding to an item may include one or more of the things, unless the relevant context clearly indicates otherwise. As used herein, each of such phrases as "A or B," "at least one of A and B," "at least one of A or B," "A, B, or C," "at least one of A, B, and C," and "at least one of A, B, or C," may include all possible combinations of the items enumerated together in a corresponding one of the phrases. As used herein, such terms as "1st" and "2nd," or "first" and "second" may be used to simply distinguish a corresponding component from another, and does not limit the components in other aspect (e.g., importance or order). It is to be understood that if an element (e.g., a first element) is referred to, with or without the term "operatively" or "communicatively", as "coupled with," "coupled to," "connected with," or "connected to" another element (e.g., a second element), it means that the element may be coupled with the other element directly (e.g., wiredly), wirelessly, or via a third element.

As used herein, the term "module" may include a unit implemented in hardware, software, or firmware, and may interchangeably be used with other terms, for example, "logic," "logic block," "part," or "circuitry". A module may be a single integral component, or a minimum unit or part thereof, adapted to perform one or more functions. For example, according to an embodiment, the module may be implemented in a form of an application-specific integrated circuit (ASIC).

Various embodiments as set forth herein may be implemented as software (e.g., the program) including one or more instructions that are stored in a storage medium (e.g., internal memory or external memory) that is readable by a machine (e.g., the electronic device). For example, a processor (e.g., the processor) of the machine (e.g., the electronic device) may invoke at least one of the one or more instructions stored in the storage medium, and execute it, with or without using one or more other components under the control of the processor. This allows the machine to be operated to perform at least one function according to the at least one instruction invoked. The one or more instructions may include a code generated by a complier or a code executable by an interpreter. The machine-readable storage medium may be provided in the form of a non-transitory storage medium. Here, the term "non-transitory" simply means that the storage medium is a tangible device, and does not include a signal (e.g., an electromagnetic wave), but this term does not differentiate between where data is semi-permanently stored in the storage medium and where the data is temporarily stored in the storage medium.

According to an embodiment, a method according to various embodiments of the disclosure may be included and provided in a computer program product. The computer program products may be traded as commodities between sellers and buyers. The computer program product may be distributed in the form of a machine-readable storage medium (e.g., compact disc read only memory (CD-ROM)), or be distributed (e.g., downloaded or uploaded) online via an application store (e.g., Play Store™), or between two user devices (e.g., smart phones) directly. If distributed online, at least part of the computer program product may be temporarily generated or at least temporarily stored in the machine-readable storage medium, such as memory of the manufacturer's server, a server of the application store, or a relay server.

According to various embodiments, each component (e.g., a module or a program) of the above-described components may include a single entity or multiple entities. Some of the plurality of entities may be separately disposed in different components. According to various embodiments, one or more of the above-described components may be omitted, or one or more other components may be added. Alternatively or additionally, a plurality of components (e.g., modules or programs) may be integrated into a single component. In such a case, according to various embodiments, the integrated component may still perform one or more functions of each of the plurality of components in the same or similar manner as they are performed by a corresponding one of the plurality of components before the integration. According to various embodiments, operations performed by the module, the program, or another component may be carried out sequentially, in parallel, repeatedly, or heuristically, or one or more of the operations may be executed in a different order or omitted, or one or more other operations may be added.

In the following detailed description, a length direction, a width direction, and/or a thickness direction of the electronic device may be mentioned and may be defined as a 'Y-axis direction,' 'X-axis direction', and/or 'Z-axis direction,' respectively. In an embodiment, 'negative/positive (-/+)' may be mentioned together with the Cartesian coordinate system exemplified in the drawings with respect to the direction in which the component is oriented. For example, the front surface of the electronic device or housing may be defined as a 'surface facing in the +Z direction,' and the rear surface may be defined as a 'surface facing in the -Z direction'. In an embodiment, the side surface of the electronic device or housing may include an area facing in the +X direction, an area facing in the +Y direction, an area facing in the -X direction, and/or an area facing in the -Y direction. In another embodiment, the 'X-axis direction' may mean including both the '-X direction' and the '+X direction'. It should be noted that the directions are so defined with respect to the Cartesian coordinate system shown in the drawings for the sake of brevity of description, and the description of these directions or components do not limit various embodiments of the disclosure.

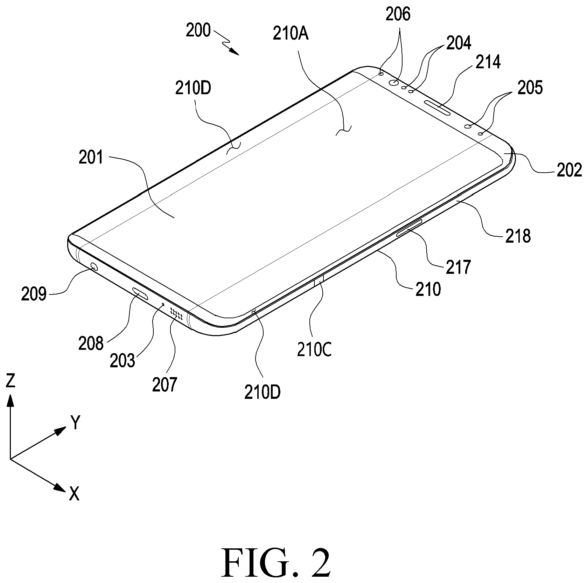

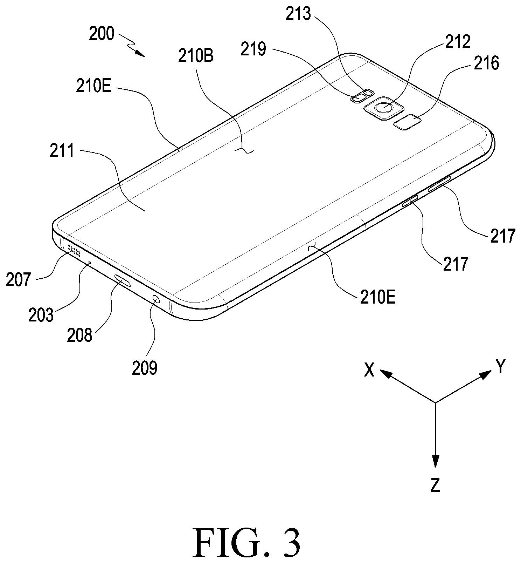

FIG. 2 is a front perspective view illustrating an electronic device 200 (e.g., the electronic device 101 of FIG. 1) according to an embodiment of the disclosure. FIG. 3 is a rear perspective view illustrating the electronic device 200 of FIG. 2.

Referring to FIGS. 2 and 3, according to an embodiment, an electronic device 200 may include a housing 210 including a first side (or front surface) 210A, a second side (or rear surface) 210B, and a side surface 210C surrounding the space between the first surface 210A and the second surfaces 210B. According to another embodiment (not shown), the housing may denote a structure forming part of the first surface 210A, the second surface 210B, and the side surface 210C of FIG. 2. According to an embodiment, at least part of the first surface 210A may have a substantially transparent front plate 202 (e.g., a glass plate or polymer plate including various coat layers). The second surface 210B may be formed by a rear plate 211 that is substantially opaque. The rear plate 211 may be formed of, e.g., laminated or colored glass, ceramic, polymer, metal (e.g., aluminum, stainless steel (STS), or magnesium), or a combination of at least two thereof. The side surface 210C may be formed by a side structure 218 that couples to the front plate 202 and the rear plate 211 and includes a metal and/or polymer. According to an embodiment, the rear plate 211 and the side structure 218 may be integrally formed together and include the same material (e.g., a metal, such as aluminum).

In the embodiment illustrated, the front plate 202 may include two first regions 110D, which seamlessly and bendingly extend from the first surface 210A to the rear plate 211, on both the long edges of the front plate 202. In the embodiment (refer to FIG. 3) illustrated, the rear plate 211 may include second regions 210E, which seamlessly and bendingly extend from the second surface 210B to the front plate 202, on both the long edges. According to an embodiment, the front plate 202 (or the rear plate 211) may include only one of the first regions 210D (or the second regions 210E). Alternatively, the first areas 210D or the second areas 210E may partially be excluded. According to embodiments, at side view of the electronic device 200, the side structure 218 may have a first thickness (or width) for sides that do not have the first regions 210D or the second regions 210E and a second thickness, which is smaller than the first thickness, for sides that have the first regions 210D or the second regions 210E.

According to an embodiment, the electronic device 200 may include at least one of a display 201 (e.g., the display module 160 of FIG. 1), audio modules 203, 207, and 214 (e.g., the audio module 170 of FIG. 1), sensor modules 204, 216, and 219 (e.g., the sensor module 176 of FIG. 1), camera modules 205, 212, and 213 (e.g., the camera module 180 of FIG. 1), a key input device 217 (e.g., the input module 150 of FIG. 1), a light emitting device 206, and connector holes 208 and 209. According to an embodiment, the electronic device 200 may exclude at least one (e.g., the key input device 217 or the light emitting device 206) of the components or may add other components.

The display 201 may be exposed through a significant portion of the front plate 202. According to an embodiment, at least a portion of the display 201 may be exposed through the front plate 202 forming the first surface 210A and the first regions 210D of the side surface 210C. According to an embodiment, the edge of the display 201 may be formed to be substantially the same in shape as an adjacent outer edge of the front plate 202. According to another embodiment (not shown), the gap between the outer edge of the display 201 and the outer edge of the front plate 202 may remain substantially even to give a larger area of exposure the display 201.

According to an embodiment (not shown), the screen display region of the display 201 may have a recess or opening in a portion thereof, and at least one or more of the audio module 214, sensor module 204, camera module 205, and light emitting device 206 may be aligned with the recess or opening. According to another embodiment (not shown), at least one or more of the audio module 214, sensor module 204, camera module 205, fingerprint sensor 216, and light emitting device 206 may be included on the rear surface of the screen display area of the display 201. According to an embodiment (not shown), the display 201 may be disposed to be coupled with, or adjacent, a touch detecting circuit, a pressure sensor capable of measuring the strength (pressure) of touches, and/or a digitizer for detecting a magnetic field-type stylus pen. According to an embodiment, at least part of the sensor modules 204 and 219 and/or at least part of the key input devices 217 may be disposed in the first regions 210D and/or the second regions 210E.

The audio modules 203, 207, and 214 may include a microphone hole 203 and speaker holes 207 and 214. The microphone hole 203 may have a microphone inside to obtain external sounds. According to an embodiment, there may be a plurality of microphones to be able to detect the direction of a sound. The speaker holes 207 and 214 may include an external speaker hole 207 and a phone receiver hole 214. According to an embodiment, the speaker holes 207 and 214 and the microphone hole 203 may be implemented as a single hole, or speakers may be rested without the speaker holes 207 and 214 (e.g., piezo speakers).

The sensor modules 204, 216, and 219 may generate an electrical signal or data value corresponding to an internal operating state or external environmental state of the electronic device 200. For example, the sensor modules 204, 216, and 219 may include a first sensor module 204 (e.g., a proximity sensor) and/or a second sensor module (not shown) (e.g., a fingerprint sensor), which is disposed on the first surface 210A of the housing 210, and/or a third sensor module 219 (e.g., a heartrate monitor (HRM) sensor) and/or a fourth sensor module 216 (e.g., a fingerprint sensor) disposed on the second surface 210B of the housing 210. The fingerprint sensor may be disposed on the second surface 210B as well as the first surface 210A (e.g., the display 201) of the housing 210. The electronic device 200 may further include the sensor module of FIG. 1, e.g., at least one of a gesture sensor, a gyro sensor, an atmospheric pressure sensor, a magnetic sensor, an acceleration sensor, a grip sensor, a color sensor, an infrared (IR) sensor, a biometric sensor, a temperature sensor, a humidity sensor, or an illuminance sensor.

The camera modules 205, 212, and 213 may include a first camera device 205 disposed on the first surface 210A of the electronic device 200, and a second camera device 212 and/or a flash 213 disposed on the second surface 210B. The camera devices 205 and 212 may include one or more lenses, an image sensor, and/or an image signal processor. The flash 213 may include, e.g., a light emitting diode (LED) or a xenon lamp. According to an embodiment, two or more lenses (an infrared (IR) camera, a wide-angle lens, and a telephoto lens) and image sensors may be disposed on one surface of the electronic device 200.

The key input device 217 may be disposed on the side surface 210C of the housing 210. According to another embodiment, the electronic device 200 may exclude all or some of the above-mentioned key input devices 217 and the excluded key input devices 217 may be implemented in other forms, e.g., as soft keys, on the display 201. According to an embodiment, the key input device 217 may include the sensor module 216 disposed on the second surface 210B of the housing 210.

The light emitting device 206 may be disposed on, e.g., the first surface 210A of the housing 210. The light emitting device 206 may provide, e.g., information about the state of the electronic device 200 in the form of light. According to an embodiment, the light emitting device 206 may provide a light source that interacts with, e.g., the camera module 205. The light emitting device 206 may include, e.g., a light emitting diode (LED), an infrared (IR) LED, or a xenon lamp.

The connector holes 208 and 209 may include a first connector hole 208 for receiving a connector (e.g., a universal serial bus (USB) connector) for transmitting or receiving power and/or data to/from an external electronic device and/or a second connector hole 209 (e.g., an earphone jack) for receiving a connector for transmitting or receiving audio signals to/from the external electronic device.

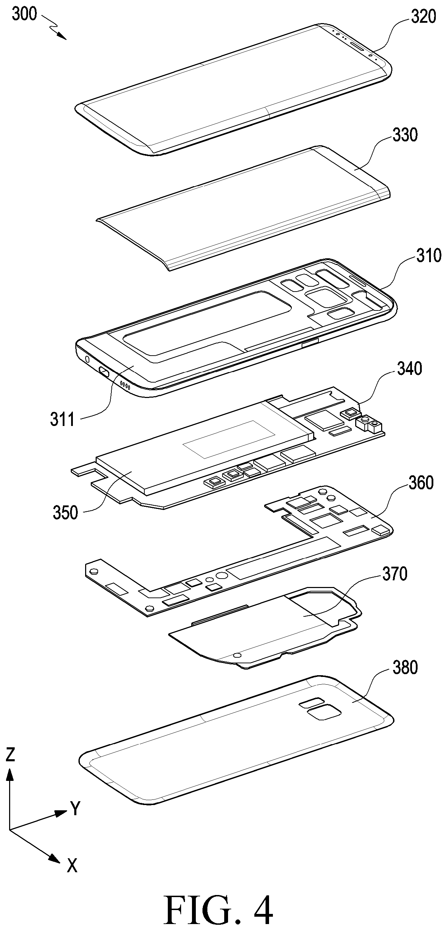

FIG. 4 is an exploded perspective view illustrating the electronic device 200 of FIG. 2.

Referring to FIG. 4, an electronic device 300 (e.g., the electronic devices 101 and 200 of FIGS. 1 to 3) may include a side structure 310 (e.g., the side surface 210C of FIG. 2), a first supporting member 311 (e.g., a bracket), a front plate 320, a display 330 (e.g., the display module 160 of FIG. 1 or the display 201 of FIG. 2), a printed circuit board 340 (e.g., a printed circuit board (PCB), a printed board assembly (PBA), a flexible PCB (FPCB), or a rigid-flexible PCB (RFPCB)), a battery 350 (e.g., the battery 189 of FIG. 1), a second supporting member 360 (e.g., a rear case), an antenna 370, and/or a rear plate 380. According to an embodiment, the electronic device 300 may exclude at least one (e.g., the first supporting member 311 or the second supporting member 360) of the components or may add other components. At least one of the components of the electronic device 300 may be the same or similar to at least one of the components of the electronic device 200 of FIG. 2 or 3 and no duplicate description is made below.

The first supporting member 311 may be disposed inside the electronic device 300 to be connected with the side surface structure 310 or integrated with the side surface structure 310. The first supporting member 311 may be formed of, e.g., a metallic material and/or non-metallic material (e.g., polymer). The display 330 may be joined onto one surface of the first supporting member 311, and the printed circuit board 340 may be joined onto the opposite surface of the first supporting member 232. A processor (e.g., the processor 120 of FIG. 1), memory (e.g., the memory 130 of FIG. 1), and/or an interface (e.g., the interface 177 of FIG. 1) may be mounted on the printed circuit board 340. The processor may include one or more of, e.g., a central processing unit, an application processor, a graphic processing device, an image signal processing, a sensor hub processor, or a communication processor.

The memory may include, e.g., a volatile or non-volatile memory.

The interface may include, e.g., a high definition multimedia interface (HDMI), a universal serial bus (USB) interface, a secure digital (SD) card interface, and/or an audio interface. The interface may electrically or physically connect, e.g., the electronic device 300 with an external electronic device and may include a USB connector, an SD card/multimedia card (MMC) connector, or an audio connector.

The battery 350 may be a device for supplying power to at least one component of the electronic device 300. The battery 450 may include, e.g., a primary cell which is not rechargeable, a secondary cell which is rechargeable, or a fuel cell. At least a portion of the battery 350 may be disposed on substantially the same plane as the printed circuit board 340. The battery 350 may be integrally or detachably disposed inside the electronic device 300.

The antenna 370 may be disposed between the rear plate 380 and the battery 350. The antenna 370 may include, e.g., a near-field communication (NFC) antenna, a wireless charging antenna, and/or a magnetic secure transmission (MST) antenna. The antenna 370 may perform short-range communication with, e.g., an external device or may wirelessly transmit or receive power necessary for charging. According to an embodiment of the present invention, an antenna structure may be formed by a portion or combination of the side structure 310 and/or the first supporting member 311.

It should be noted that in the following detailed description, reference may be made to the electronic devices 101, 200, and 300 of the foregoing embodiments, and components, which may easily be understood through the foregoing embodiments, are assigned the same reference numerals or omitted and a description thereof may be omitted.

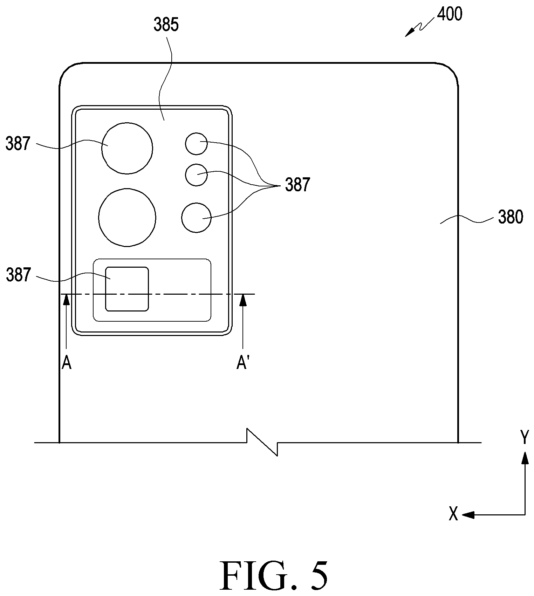

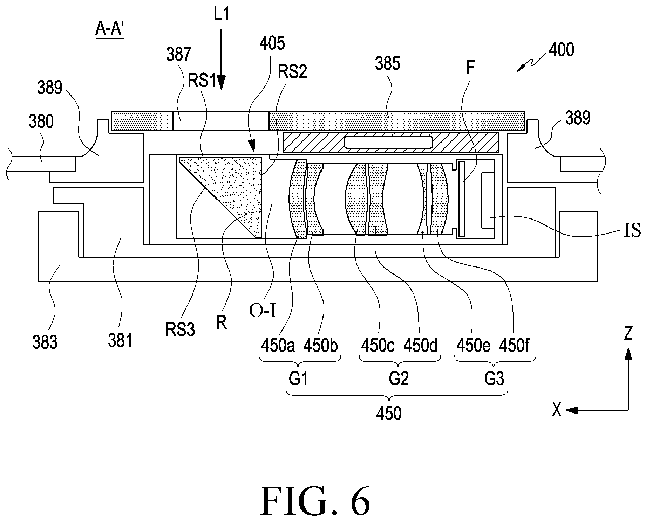

FIG. 5 is a rear plan view illustrating a rear surface of an electronic device 400 (e.g., the electronic devices 101, 200, and 300 of FIGS. 1 to 4) according to an embodiment of the disclosure. FIG. 6 is a cross-sectional view illustrating a portion of the electronic device 400, taken along line A-A' of FIG. 5.

Referring to FIGS. 5 and 6, the electronic device 400 according to an embodiment of the disclosure may include a camera window 385 disposed on one surface (e.g., the second surface 210B of FIG. 3). In some embodiments, the camera window 385 may be a portion of the rear plate 380. In an embodiment, the camera window 385 may be coupled to the rear plate 380 through an ornamental member 389, and when it is viewed from the outside, the ornamental member 389 may be exposed in a form surrounding the camera window 385. According to an embodiment, the camera window 385 may include a plurality of transparent areas 387. The electronic device 400 may receive external light or emit light to the outside through at least one of the transparent areas 387. For example, the electronic device 400 may include at least one camera module 405 (e.g., the camera modules 180, 205, 212, and 213 of FIGS. 1 to 3) disposed to correspond to at least some of the transparent areas 387 and at least one light source (e.g., an infrared light source) disposed to correspond to others of the transparent areas 387. For example, the camera module or the light source may receive external light or emit light to the outside of the electronic device 400 through any one of the transparent areas 387.

According to an embodiment, the electronic device 400 may include at least one of a camera module 405 or a lens assembly, such as a wide-angle camera, an ultra-wide-angle camera, a macro camera, and a telephoto camera as a light receiving element, or an infrared photodiode, and may include a flash (e.g., the flash 213 of FIG. 3) or an infrared laser diode as a light source or light emitting element. In an embodiment, the electronic device 400 may emit infrared laser to the object and receive the infrared laser reflected by the object, using the infrared laser diode and infrared photo diode, thereby detecting the distance or depth to the object. In another embodiment, the electronic device 400 may obtain an image of the object by the lens assembly, e.g., by any one or a combination of two or more of the camera modules 405 and, as needed, provide illumination toward the object by means of a flash.

According to an embodiment, among the camera modules, the wide-angle camera, the ultra-wide-angle camera, or a macro camera may have a smaller length in the optical axis O-I direction of the lens(es) as compared to the telephoto camera (e.g., the camera module 405). For example, the telephoto camera (e.g., the camera module 405) having a relatively large focal length adjustment range may secure a sufficient length or space in the optical axis O-I direction and thus a distance and area where the lens(es) 450 (s) may move. In an embodiment, in the wide-angle camera, the ultra-wide-angle camera, or the macro camera, although the lens(es) are arranged along the direction of the thickness (e.g., the thickness measured in the Z-axis direction of FIG. 4 or 6) of the electronic device 400, the substantial influence on the thickness of the electronic device 400 may be small. For example, the wide-angle camera, the ultra-wide-angle camera, or the macro camera may be disposed in the electronic device 400 in a state in which the direction in which light is incident from the outside to the electronic device 400 and the optical axis direction of the lens(es) are substantially the same. In another embodiment, as compared with the wide-angle camera, the ultra-wide-angle camera, or the macro camera, the camera module 405 (e.g., a telephoto camera) has a small angle of view but may be useful for capturing a object at a greater distance and may include more lens(es) 450 or a longer moving distance of the lens(es) 450 in focal length adjustment. For example, when the lens(es) 450 of the camera module 405 are arranged in the thickness direction (e.g.,

the Z-axis direction) of the electronic device 400, the thickness of the electronic device 400 may increase or a significant portion of the camera module 405 may protrude to the outside of the electronic device 400.

According to an embodiment, a folded camera (e.g., the camera module 405) further may include a reflective member R, such as a prism or a mirror, so that the direction (e.g., the optical axis O-I direction of FIG. 6) in which the lens(es) 450 are arranged may be designed or disposed to cross the direction in which external light is incident (e.g., the incident direction L1 of FIG. 6). For example, the reflective member R may be disposed on the object-side of the first lens group G1 to refract or reflect the light incident from the outside, guiding the light to the image sensor IS or in the direction of the array of the lens(es) 450.

According to an embodiment, the reflective member R may include an incident surface RS1 facing the external space, an exit surface RS2 facing the lens 450, and/or a reflective surface RS3 inclined with respect to the incident surface RS1 (or exit surface RS2). For example, external light may be incident through the incident surface RS1 and be reflected by the reflective surface RS3, and the reflected light may pass through the exit surface RS2 to the lens 450 or the image sensor IS. Depending on the shape or size, the electronic device 400 may not include the reflective member R, and when it does not include the reflective member R, the incident direction L1 may be substantially parallel to or coincident with the optical axis O-I direction.

According to an embodiment, the incident direction L1 may be substantially parallel to the thickness direction (e.g., the Z-axis direction) of the electronic device 400, and the arrangement direction of the lens(es) 450 may be a direction in which the light refracted or reflected by the reflective member R travels and crosses the incident direction L1. In some embodiments, the arrangement direction or the optical axis O-I direction of the lens(es) 450 may be substantially perpendicular to the incident direction L1, and be parallel to the width direction (e.g., the X-axis direction of FIG. 4) or the length direction (e.g., the Y-axis direction of FIG. 4) of the electronic device 400 or the housing (e.g., the housing 210 of FIG. 2).

The lens assembly or camera module 405 illustrated in FIG. 6 is an example of a folded camera or a telephoto camera and may be disposed so that the lens(es) 450 may move back and forth in the width direction (e.g., a direction parallel to the X axis, or the optical axis O-I direction) of the electronic device 400. According to an embodiment, the camera module 405 may include a reflective member R that receives and refracts or reflects external light, a lens(es) 450 that focuses the light refracted or reflected by the reflective member R, and/or an image sensor IS aligned on the optical axis O-I of lens(es) 450. For example, the image sensor IS may receive external light through the reflective member R and the lens(es) 450. In some embodiments, external light may be incident on the reflective member R along the incident direction L1, and be reflected or refracted by the reflective member R and be guided to the image sensor IS along the optical axis O-I direction. For example, the lens(es) 450 may focus or guide the light reflected or refracted by the reflective member R to the image sensor IS.

According to an embodiment, the reflective member R may include, e.g., a prism, and may reflect or refract the light, incident in the incident direction L1, in a direction (e.g., the optical-axis O-I direction) substantially perpendicular to the incident direction L1. Although the configuration in which the incident direction L1 and the optical axis O-I direction are substantially perpendicular to each other is exemplified in the present embodiment, various embodiments of the disclosure are not limited thereto, and depending on the structure of the electronic device 400 or the housing (e.g., the housing 210 of FIG. 2), the angle between the incident direction L1 and the optical axis O-I direction crossing effective area may vary.

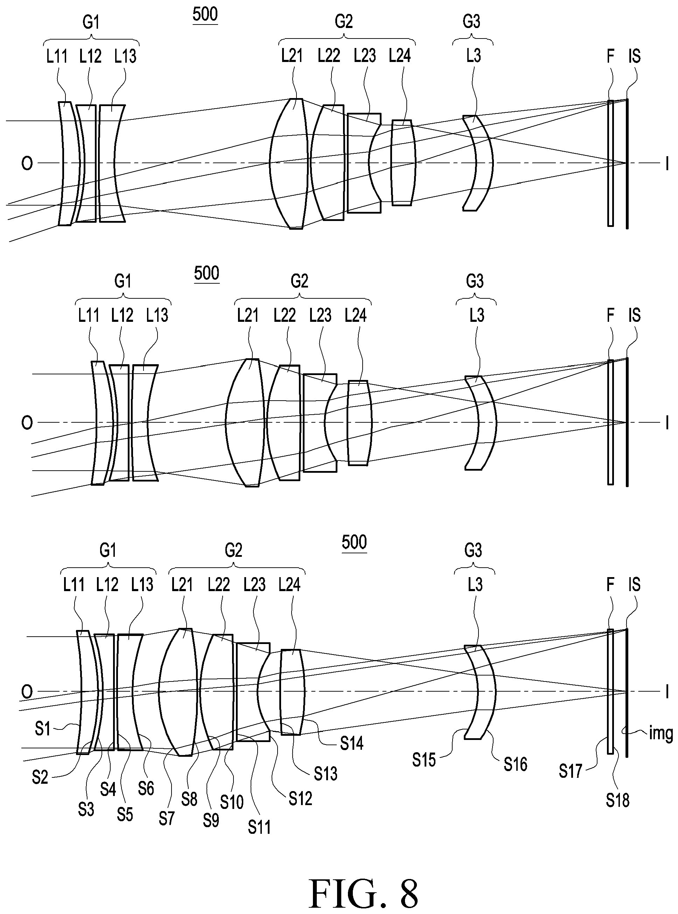

According to an embodiment, the camera module 405 may include a plurality of lenses 450 sequentially arranged along the optical axis O-I direction from the side of the object (e.g., the object obj of FIG. 8) to the image sensor IS side. At least one or two or more of the lenses included in the plurality of lens(es) 450 may be combined to form a plurality of lens groups G1, G2, and G3. In the disclosure, the plurality of lens groups G1, G2, and G3 may include a first lens group G1, a second lens group G2, and a third lens group G3. In the illustrated embodiment, the first lens group G1 may include a first lens 450a and a second lens 450b among the lenses 450, the second lens group G2 may include a third lens 453c and a fourth lens 453d among the lenses 450, and/or the third lens group G3 may include a fifth lens 453e and a sixth lens 453f among the lenses 450. In an embodiment, the incident direction L1 may be parallel to the thickness direction (e.g., the Z-axis direction) of the electronic device 400. The optical axis O-I direction may be parallel to the width direction (e.g., the X-axis direction) or the length direction (e.g., the Y-axis direction) of the electronic device 400.

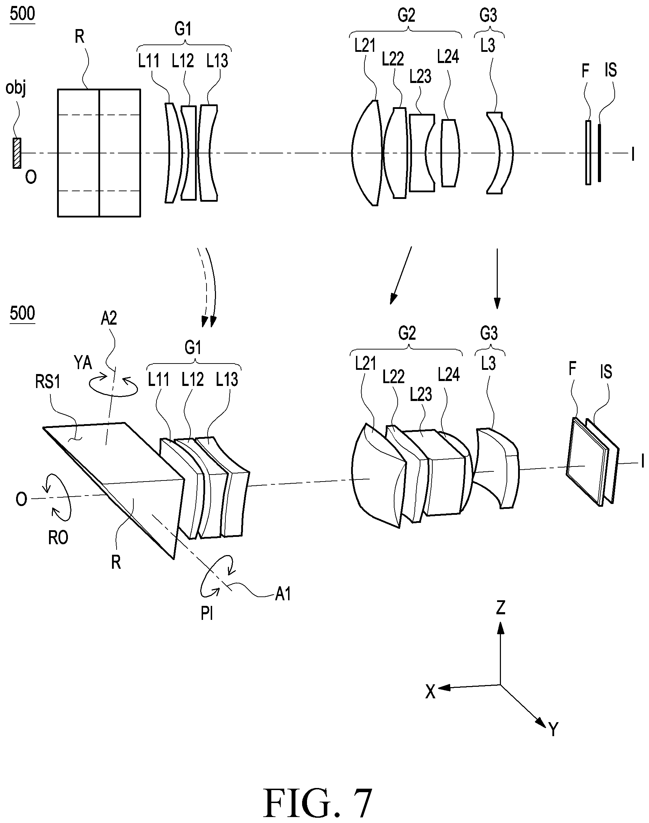

Although FIG. 6 illustrates a configuration in which the camera module 405 includes six lenses 450, it should be noted that this is intended to exemplify a configuration in which one lens group G1, G2, or G3 includes a plurality of lenses, and various embodiments of the disclosure are not limited thereto. For example, if the conditions suggested through various embodiments are met, the number of the lenses included in each lens group G1, G2, and G3 may be selected as an appropriate one, which is described in greater detail with reference to the embodiments of FIGS. 7 to 23C.

According to an embodiment, the lens(es) 450 may be formed of a synthetic resin (e.g., plastic) so as to have a high design freedom in size or shape. The lens(es) 450 formed of the synthetic resin may have deviations in resolution depending on changes in temperature or humidity. The deviation in resolution in the lens assembly or camera module 405 having a large focal length may be larger than that of a standard camera or a wide-angle camera. According to an embodiment, when the camera module 405 implements the telephoto function, at least one of the lenses 450a and 450b of the first lens group G1 and/or at least one of the lenses 450c and 450d of the second lens group G2 may be formed of a glass material so that it is possible to suppress the deviation in resolution depending on the operating environment. Various embodiments of the material of the lens 450 are described below in detail.

At least one of the lens groups G1, G2, and G3 may move back and forth along the optical axis O-I direction between the image sensor 451 and the reflective member R. The camera module 405 may perform a magnification adjustment (varifocal) operation (hereinafter, referred to as a 'zooming operation') or a focus adjustment operation (focusing) using at least one of the plurality of lens groups G1, G2, and G3. According to an embodiment, while the third lens group G3 disposed third from the object-side remains in the static state, the electronic device 400, the camera module 405, or the processor 120 of FIG. 1 may perform a zooming operation or automatic focus adjustment driving (hereinafter, referred to as 'auto focusing (AF) driving') using the first lens group G1 and/or the second lens group G2. For example, the electronic device 400, the camera module 405, or the processor 120 of FIG. 1 may adjust the magnification or adjust the focus (e.g., AF driving) by moving back and forth the first lens group G1 or the second lens group G2 in the optical-axis O-I direction in a state in which the third lens group G3 is fixed. Adjusting the magnification by moving the third lens group G3 requires precise control for AF driving since the magnification is large and the AF sensitivity is high. However, in a state in which the third lens group G3 is fixed as in the disclosure, AF sensitivity is relatively lower, addressing the issues that may occur as the AF sensitivity increases. Further, according to an embodiment, in the disclosure, the zooming operation may be performed using changes in distance as the first lens group G1 and the second lens group G2 move, and the AF driving may be performed using the first lens group G1, in which the change in focus movement and/or resolution is small, of the first lens group G1 and the second lens group G2.

In the above-described embodiments, in describing the zooming operation and/or focus adjustment operation of the camera module 405, only moving and/or fixing the plurality of lens groups G1, G2, and G3 have been mentioned. However, in moving any one of the plurality of lens groups G1, G2, and G3, there may be various embodiments for moving and/or fixing the lens(es) included in the lens group. For example, when the first lens group G1 including the plurality of lenses is moved in the optical-axis direction, all of the plurality of lenses included in the first lens group G1 may be moved in the optical-axis direction by the same distance, or at least some of the lenses may be moved by different distances from the other lenses and, according to an embodiment, some lenses may be substantially fixed in position.

FIG. 7 is a view illustrating a lens assembly 500 (e.g., the camera module 180 or 405 of FIG. 1 or 6) according to an embodiment of the disclosure. FIG. 8 is a view illustrating a configuration of a lens assembly, illustrating a lens (group) array at a wide-angle zoom, a mid-range zoom, and a telephoto zoom according to an embodiment of the disclosure.

In an embodiment, 'wide-angle zoom' may mean a position or state in which, in the moving range of the first lens group G1 and/or second lens group G2, the focal length of the lens assembly 500 is the minimum, and the angle of view is the maximum, and 'telephoto zoom' may mean a position or state in which, in the moving range of the first lens group G1 and/or second lens group G2, the focal length of the lens assembly 500 is the maximum, and the angle of view is the minimum. The upper drawing of FIG. 8 may illustrate a lens (group) array at the wide-angle zoom of the lens assembly 500, the middle drawing of FIG. 8 may illustrate a lens (group) array at the mid-range zoom of the lens assembly 500, and the lower drawing of FIG. 8 may illustrate a lens (group) array at the telephoto zoom of the lens assembly 500. It should be noted that in adding the reference denotations to the surfaces of the lens(es) L11, L12, L13, L21, L22, L23, L24, and L3 included in the lens assembly 500, the denotations are added only for the lens (group) array at the telephoto zoom for convenience. The lens assembly may be zoomed in from the wide-angle zoom to the telephoto zoom or zoomed out from the telephoto zoom to the wide-angle zoom, and may pass through the mid-range zoom between the zoom-in operation and the zoom-out operation. According to an embodiment, the array from the wide-angle zoom through the mid-range zoom to the telephoto zoom may be continuously performed.

Among the plurality of lens groups G1, G2, and G3, the first lens group G1 may be disposed first from the object-side and may include at least two lenses L11 and L12 (e.g., the first lens 450a and the second lens 450b of FIG. 6) while having a negative refractive power. That the first lens group G1 has a negative refractive power may mean that the sum of the refractive powers of the lenses included in the first lens group G1 has a negative refractive power. The first lens group G1 may include a lens having a positive refractive power and a lens having a negative refractive power. Referring to FIG. 7, in an embodiment, the 1-1th lens L11 disposed first from the object-side in the first lens group G1 may have a positive refractive power, and the 1-2th lens L12 of the first lens group G1 may be disposed between the 1-1th lens L11 and the image sensor IS while having a negative refractive power. According to an embodiment of the disclosure, a lens having a large refractive power may be composed of a glass lens, suppress the deviation in resolution depending on the operating environment. For example, according to the embodiment of FIG. 7, the 1-2th lens L12 having a positive refractive power may be composed of a glass lens. In an embodiment, the 1-1th lens L11 may have the object (obj)-side surface S1 concave toward the object-side O. Further, additionally, the image sensor (IS)-side surface S2 of the 1-1th lens L11 may be formed to be convex toward the image sensor-side I. When the image sensor (IS)-side surface S2 of the 1-1th lens L11 is concave, the object (obj)-side surface S3 of the 1-2th lens L12 may be convex. In contrast, when the image sensor (IS)-side surface S2 of the 1-1th lens L11 is convex, the object (obj)-side surface S3 of the 1-2th lens L12 may be concave. FIG. 7 illustrates an embodiment in which the image sensor (IS)-side surface S2 of the 1-1th lens L11 is convex, and the object (obj)-side surface S3 of the 1-2th lens L12 is concave. According to an embodiment, the first lens group G1 may further include at least one lens having positive or negative refractive power. For example, as illustrated in FIG. 7, the first lens group G1 may further include a 1-3th lens L13 disposed between the 1-2th lens L12 and the image sensor IS. When the 1-3th lens L13 is further included, the 1-3th lens L13 disposed first from the image sensor-side I may have a negative refractive power, the 1-2th lens L12 disposed second from the image sensor-side may have a negative refractive power, and the 1-1th lens L11 disposed third from the image sensor-side or disposed first from the object-side may have a positive refractive power.

In the zooming operation, it may be moved in a direction in which the gap between the first lens group G1 and the second lens group G2 reduces. In this case, the third lens group G3 may be fixed. Referring to FIGS. 7 and 8, the first lens group G1 may be disposed to move back and forth along the optical-axis O-I direction. In the zooming operation, between the wide-angle zoom and a telephoto zoom, the first lens group G1 may move by a predetermined distance in a first direction (direction from the optical axis to the sensor side) toward the second lens group G2 along the optical-axis O-I direction and then move in a second direction (direction opposite to the first direction) away from the second lens group G2 along the optical-axis O-I direction, and the second lens group G2 may continuously move toward the first lens group G1 along the optical-axis O-I direction.

In an embodiment, the lens assembly 500 or the first lens group G1 may satisfy the condition suggested through Formula 1 below.

[Formula 1]

$$-1.9 < \frac{f1G}{fw} < -1.1$$

Here, 'f1G' may be a total focal length of the first lens group G1, and 'fw' may be a total composite focal length of the lens assembly 500 at a wide-angle zoom. According to an embodiment, when the upper limit of the condition suggested in Formula 1 is exceeded, the refractive power (which is inversely proportional to the focal length) of the first lens group G1 may weaken, so that when zooming from the wide-angle zoom to the telephoto zoom, the amount of movement of the moving first lens group G1 may decrease, and the AF sensitivity may increase. Further, since the movement amount for AF is small but, when a decenter up/down or left/right of the first lens group G1 occurs, sensitivity increases, it is required to reduce the error during operation by avoiding the upper limit of Formula 1 from being exceeded. According to an embodiment, when the lower limit of the condition suggested in Formula 1 is not reached, the refractive power of the first lens group G1 may strengthen, so that the movement amount of the first lens group G1 zooming from the wide-angle zoom to the telephoto zoom may increase, and the AF sensitivity may decrease, increasing the AF movement amount. For example, the lens assembly 500 may reduce the AF sensitivity and errors by satisfying the condition suggested in Formula 1, securing stable optical performance.

According to an embodiment, the second lens group G2 among the lens groups G1, G2, and G3 may include at least three lenses L21, L22, and L23 (e.g., the third lens 450c and the fourth lens 450d of FIG. 6) and have a positive refractive power and be disposed to move back and forth along the optical axis O-I direction between the first lens group G1 and the image sensor IS. For example, the second lens group G2 may perform a magnification adjustment (varifocal) operation (hereinafter, referred to as a 'zooming operation') or a focus adjustment operation (focusing) by moving back and forth along the optical-axis O-I direction. According to an embodiment, when the second lens group G2 is moved to the object obj side, the magnification of the lens assembly 500 or the camera module 405 may be increased (e.g., zoom-in). In another embodiment, when the second lens group G2 is moved to the image sensor IS side, the magnification of the lens assembly 500 or the camera module 405 may decrease, and the field of view (FOV) may increase (e.g., zoom-out).

According to an embodiment, the second lens group G2 may include at least one lens having a positive refractive power and at least one lens having a negative refractive power, and the lens having the positive refractive power may be disposed adjacent to the lens having the negative refractive power and on the object-side of the lens having the negative refractive power. In an embodiment, the second lens group G2 may include four lenses L21, L22, L23, and L24 sequentially arranged from the object obj side to the image sensor IS side. Among the four lenses L21, L22, L23, and L24, the 2-1th lens L21 disposed first from the object obj side may have a positive refractive power, the 2-2th lens L22 disposed second may have a positive refractive power, the 2-3th lens L23 disposed third may have a negative refractive power, and/or the 2-4th lens L24 disposed fourth may have a positive refractive power. In an embodiment, the lens assembly 500 or the second lens group G2 may satisfy the condition suggested through Formula 2 below.

[Formula 2]

$$0.5 \leq \frac{f2G}{\sqrt{fw+ft}} \leq 0.8$$

Here, 'f2G' may be a total focal length of the second lens group G2, 'fw' may be a total composite focal length of the lens assembly 500, 600, 700, and 800 at a wide-angle zoom, and 'ft' may be a total composite focal length of the lens assembly 500, 600, 700, and 800 at a telephoto zoom.

According to an embodiment, as it approaches the upper limit of the condition suggested in Formula 2, the focal length of the second lens group G2 may increase, and the imaging magnification of the second lens group G2 may decrease. Accordingly, the decenter sensitivity of the second lens group G2 may decrease and, upon zooming, the movement amount of the first lens group G1 may increase. In an embodiment, as it approaches the lower limit of the condition suggested in Formula 2, the refractive power of the second lens group G2 may increase, and the imaging magnification may increase, increasing the decenter sensitivity of the second lens group G2. Accordingly, the refractive power of the third lens group may weaken. Further, as it approaches the lower limit of the condition suggested in Formula 2, the chief ray angle (CRA) which is the angle between the chief ray incident on the imaging plane img and the imaging plane img may increase. For example, the lens assembly 500 may easily control aberrations and secure stable optical performance by satisfying the condition suggested in Formula 2.

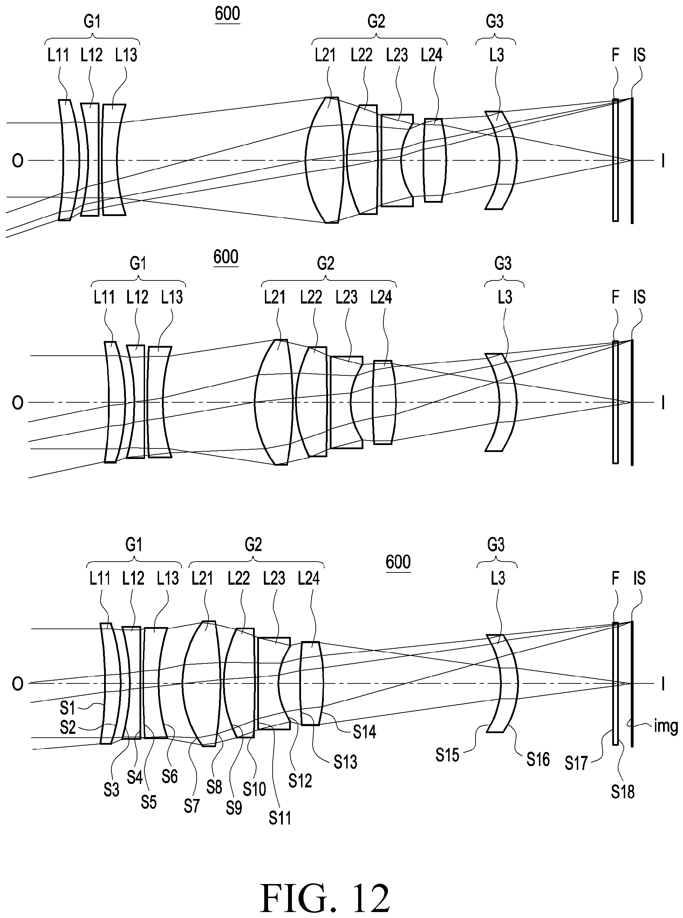

In the embodiments of FIG. 12, 16, and/or 20 described below, together with the embodiments of FIGS. 7 and 8, the first lens group G1 and/or the second lens group G2 of the lens assembly may have data as shown in Table 1 below regarding the conditions suggested through Formula 1 or Formula 2.

[Table 1]

|  | embodiment 1 (e.g., the embodiment of FIG. 8) | embodiment 2 (e.g., the embodiment of FIG. 12) | embodiment 3 (e.g., the embodiment of FIG. 16) | embodiment 4 (e.g., the embodiment of FIG. 20) |
|---|---|---|---|---|
| Formula 1 | -1.38 | -1.62 | -1.47 | -1.84 |
| Formula 2 | 0.58 | 0.63 | 0.65 | 0.73 |

According to an embodiment, among the plurality of lens groups G1, G2, and G3, the third lens group G3 may include at least one lens L3 (e.g., the fifth lens 450e and/or the sixth lens 450f of FIG. 6) and may have a positive refractive power. For example, the third lens group G3 may be fixed in position. According to an embodiment, the lens assembly 500 or camera module 405 may further include an infrared cut filter F disposed between the third lens group G3 and the image sensor IS. Infrared rays are practically indistinguishable with the naked eye, but may be detected by a photosensitive film or image sensor IS. The infrared cut filter F blocks the infrared rays incident on the image sensor IS, thereby reducing or preventing degradation of the quality of the captured image.

According to an embodiment, the lens assembly 500 may further include an aperture (or a stop) (e.g., a surface indicated as 'S7' in FIG. 8), and at least one of the lenses L11, L12, L13, L21, L22, L23, L24, and L3 or the aperture may have a shape other than a circular shape. For example, at least one of the lenses L11, L12, L13, L21, L22, L23, L24, and L3 and/or the aperture may be manufactured in an elliptical shape, or a generally circular shape but with at least a portion of an edge formed in a linear shape (e.g., a D-cut shape). According to an embodiment, the aperture may be disposed between the first lens (e.g., the 2-1th lens L21) from the object-side of the second lens group G2 and the first lens (e.g., the 2-4th lens L24) from the image sensor IS side of the second lens group G2 and, in the following embodiment, a configuration may be exemplified in which it is generally disposed on the object-side of the second lens group G2, e.g., between the first lens group G1 and the second lens group G2.

According to an embodiment, as mentioned above, the lens(es) L11, L12, L13, L21, L22, L23, L24, and L3 or the aperture may have an elliptical shape or a D-cut shape. For example, the lens(es) L11, L12, L13, L21, L22, L23, L24, and L3 or the aperture may have an effective diameter of an elliptical shape or a D-cut shape rather than a circular shape. When the lens(es) L11, L12, L13, L21, L22, L23, L24, and L3 or the aperture has a D-cut shape, it may have a linear shape in which the curvature converges to zero and the radius of curvature is infinite.

According to an embodiment, the shape of the lens(es) L11, L12, L13, L21, L22, L23, L24, and L3 or the aperture may correspond to the aspect ratio of the image sensor IS. According to an embodiment, the lens(es) L11, L12, L13, L21, L22, L23, L24, and L3 or the aperture may provide an effective diameter having a first length corresponding to the horizontal length of the image sensor IS and a second length corresponding to the vertical length of the image sensor IS. In an embodiment, the second length may be, e.g., a length measured in the vertical direction of the first length. Although omitted for simplicity of the drawings, referring to FIGS. 7 and 8, in at least one of the lenses L11 and L12 of the first lens group G1, at least one of the lenses L21, L22, L23, and L24 of the second lens group G2, and/or the aperture (e.g., the surface indicated by 'S7' in FIG. 8), the first length may mean a length measured along the Y-axis direction, and the second length may mean a length measured along the Z-axis direction. In an embodiment, when at least one of the lens(es) L11, L12, L13, L21, L22, L23, L24, and L3 or the aperture has an elliptical shape, the first length may be a long diameter of the elliptical shape and the second length may be a short diameter of the elliptical shape.

According to an embodiment, when the lens(es) L11, L12, L13, L21, L22, L23, L24, and L3 or the aperture has a non-circular shape, the lens assembly 500, the lens(es) L11, L12, L21, L22, L23, L24, and L3, and/or the aperture may satisfy the condition suggested through the following Formula 3.

[Formula 3]

$$0.4 \leq \frac{Dy}{Dx} \leq 0.98$$

Here, 'Dy' may be the second length or short diameter of the effective diameter of the aperture, and 'Dx' may be the first length or long diameter of the effective diameter of the aperture. According to an embodiment, when the effective diameter of the lens(es) L11, L12, L13, L21, L22, L23, L24, and L3 or the aperture satisfys the condition of Formula 3, the lens assembly 500 may be easily mounted on a downsized or slimmed electronic device (e.g., the electronic devices 101, 200, 300, and 400 of FIGS. 1 to 6) while implementing a telephoto function. For example, the optical axis O-I and/or the first length may be disposed substantially parallel to the XY plane (e.g., the XY plane of FIGS. 2 to 4), and the second length may be disposed perpendicular to the XY plane or parallel to the Z axis. In some embodiments, the lens L3 of the third lens group G3 adjacent to the image sensor IS may have an effective diameter of a sufficiently small size, and in this case, the lens L3 of the third lens group G3 may have an effective diameter of a substantially circular shape.

According to an embodiment, the shape of the lens(es) L11, L12, L13, L21, L22, L23, L24, and L3 or the aperture is generally described based on the effective diameter, but the actual appearance of the lens(es) L11, L12, L13, L21, L22, L23, L24, and L3 or the aperture may be different from the effective diameter. For example, to be disposed or fixed on the barrel structure, the lens(es) L11, L12, L13, L21, L22, L23, L24, and L3 or the aperture may include an additional structure (e.g., ribs) corresponding to an ineffective diameter, and the structure may have various shapes without being affected by the effective diameter of the lens(es) L11, L12, L13, L21, L22, L23, L24, and L3.

According to an embodiment, when the lens(es) L11, L12, L13, L21, L22, L23, L24, and L3 or the aperture has a shape other than a circular shape, the edge of the effective diameter may be partially exposed to the outside of the lens(es) L11, L12, L13, L21, L22, L23, L24 and L3 due to partial curvature deviation or D-cut shape at the edge of the effective diameter. The shape of the lens(es) L11, L12, L13, L21, L22, L23, L24, and L3 may cause a flare phenomenon, and may worsen the quality deviation of the photographed image depending on the photographing environment. According to one embodiment, a flare phenomenon may be suppressed or alleviated by black painting, digging, and/or carbonization at the edge of the lens(es) L11, L12, L13, L21, L22, and L3.

Referring back to FIG. 7, according to an embodiment, the reflective member R may be configured to implement a scan or image stabilization operation by rotating about at least one rotation axis. For example, the reflective member R, together with the lens(es) L11, L12, L13, L21, L22, L23, L24, and L3, may be aligned with the optical axis O-I and may perform at least one of the rolling operation RO in which it rotates about the optical axis O-I, the pitching operation PI in which it rotates abut the first axis A1 different from the optical axis O-I, or the yawing operation YA in which it rotates about the second axis A2 different from the optical axis O-I and/or the first axis A1. The rolling operation RO, the pitching operation PI, or the yawing operation YA of the reflective member R may be based on vibration detected by a sensor module (e.g., the sensor module 176 of FIG. 1) of the electronic device. In an embodiment, the first axis A1 may cross substantially perpendicular to the optical axis O-I, and the second axis A2 may cross substantially perpendicular to the optical axis O-I and the first axis A1. In an embodiment, the optical axis O-I, the first axis A1 and/or the second axis A2 may cross substantially at one point.

Referring back to FIG. 6, the electronic device 400 may include a first camera supporting member 381 or a second camera supporting member 383. The first camera supporting member 381 or the second camera supporting member 383 may place or fix at least one of the camera module 405 and/or another camera module adjacent to the camera module 405 (e.g., a wide-angle camera, an ultra-wide-angle camera, or a macro camera) to the inside of the rear plate 380 or the camera window 385. In some embodiments, the first camera supporting member 381 or the second camera supporting member 383 may be substantially a portion of a first supporting member (e.g., the second supporting member 360 of FIG. 4) or a second supporting member (e.g., the first supporting member 311 of FIG. 4).

Although reference numerals and detailed descriptions of the drawings are omitted, the camera module 405 or the electronic device 400 may further include a barrel structure for disposing the lens(es) 450 in a designated position and/or a driving device for moving back and forth the lens(es) 450 or at least one of the plurality of lens groups G1, G2, and G3 for focus adjustment. In some embodiments, the camera module 405 or the electronic device 400 may further include another driving device for moving the image sensor IS on a plane substantially perpendicular to the optical axis O-I direction, and may perform an image stabilization operation by moving the image sensor IS. In another embodiment, the image stabilization operation may be implemented by rotating the reflective member R (e.g., a prism) around the rotational axis. In the image stabilization operation, the reflective member R may perform rolling, yawing or pitching operations (e.g., rolling RO, yawing YA or pitching PI of FIG. 7) within an angular range of about 1.5 degrees.

According to an embodiment, when combined with another camera module (e.g., a wide-angle camera, an ultra-wide-angle camera, or a macro camera), the camera module 405 or the lens assembly 500 may function as a tracking or scan camera that tracks the object within the area of the image captured by the wide-angle camera, ultra-wide-angle camera, or macro camera or scans a partial area of the image. In an operation of tracking the object or scanning a portion of the image area, the reflective member R may perform a rolling operation RO, a pitching operation PI, or a yawing operation YA and, in the rolling operation RO, the pitching operation PI, or the yawing operation YA for scanning, the angular range in which the reflective member R is rotated may be larger than that in the image stabilization operation.

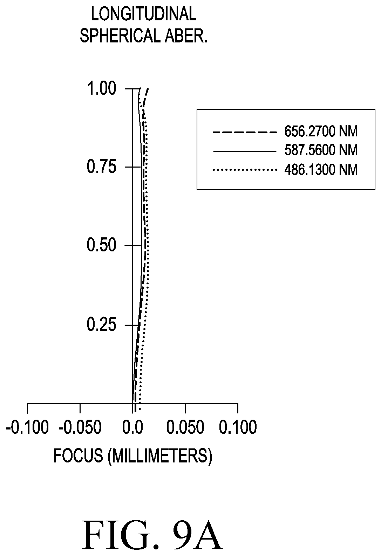

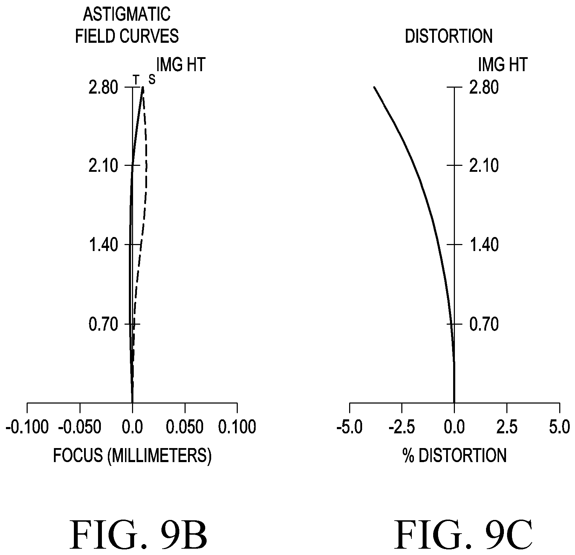

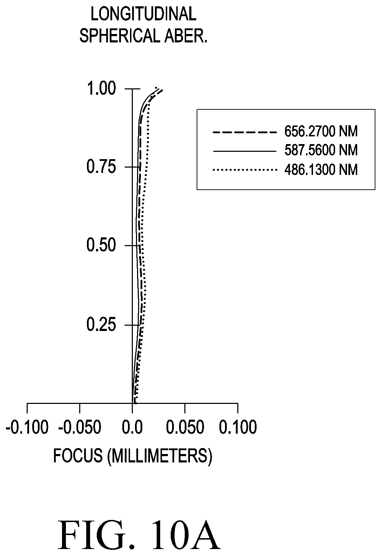

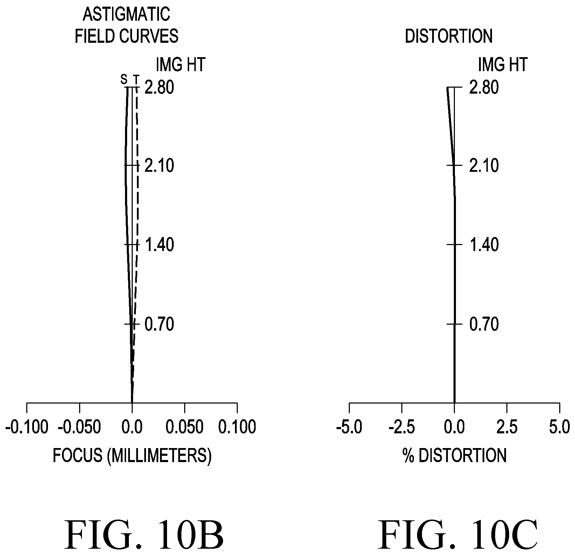

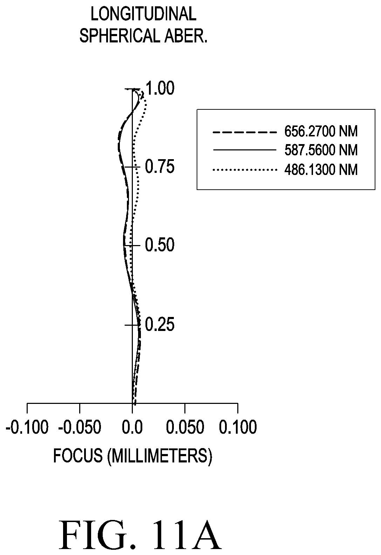

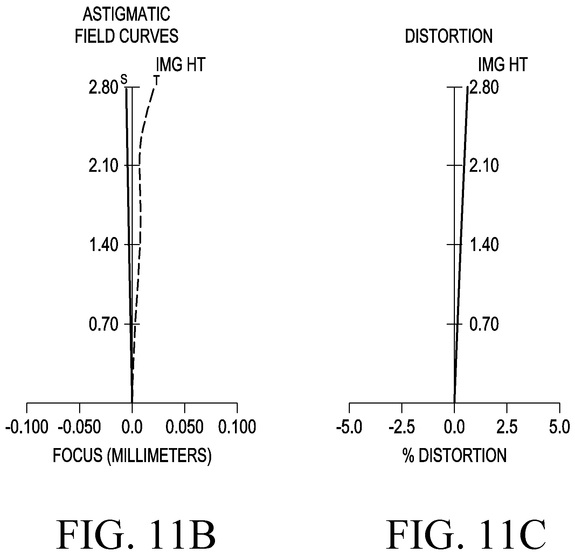

FIG. 9A is a graph illustrating spherical aberration of a lens assembly having the lens (group) array at the wide-angle zoom of FIG. 8. FIG. 9B is a graph illustrating astigmatism of a lens assembly having the lens (group) array at the wide-angle zoom of FIG. 8. FIG. 9C is a graph illustrating the distortion ratio of a lens assembly having the lens (group) array at the wide-angle zoom of FIG. 8. FIG. 10A is a graph illustrating spherical aberration of a lens assembly having the lens (group) array at the mid-range zoom of FIG. 8. FIG. 10B is a graph illustrating astigmatism of a lens assembly having the lens (group) array at the mid-range zoom of FIG. 8. FIG. 10C is a graph illustrating the distortion ratio of a lens assembly having the lens (group) array at the mid-range zoom of FIG. 8. FIG. 11A is a graph illustrating spherical aberration of a lens assembly having the lens (group) array at the telephoto zoom of FIG. 8. FIG. 11B is a graph illustrating astigmatism of a lens assembly having the lens (group) array at the telephoto zoom of FIG. 8. FIG. 11C is a graph illustrating the distortion ratio of a lens assembly having the lens (group) array at the telephoto zoom of FIG. 8.

FIGS. 9A, 10A, and 11A are graphs illustrating spherical aberration of a lens assembly 500, measured based on light having a wavelength of 656.2700 nm, a wavelength of 587.5600 nm, and/or a wavelength of 486.1300 nm. FIGS. 9B, FIG. 10B, and FIG. 11B are graphs illustrating astigmatism of a lens assembly 500, where 'S' exemplifies the sagittal plane and 'T' exemplifies the tangential plane. FIGS. 9C, 10C, and 11C are graphs illustrating the distortion ratio of a lens assembly 500.

Referring to FIGS. 9A to 11C, the lens assembly 500 (e.g., the camera module 405 of FIG. 6) may satisfy at least one of the configurations mentioned in the above-described embodiments or conditions suggested through Formula 1, Formula 2, and Formula 3, and may include the first lens group G1, the second lens group G2, the third lens group G3, the infrared cut filter F, and/or the image sensor IS (e.g., a sensor plane or an imaging plane img) which are sequentially arranged from the object obj side. The first lens group G1 may include three lenses L11, L12, and L13, the second lens group G2 may include four lenses L21, L22, L23, and L24, and the third lens group G3 may include one lens L3. In an embodiment, the lens assembly 500 may have the focal length adjustable within a range of about 9.8 to 18.9mm, the f-number adjustable in the range of about 2.7 to 3.9, and the angle of view adjustable in the range of about 33.1 to 16.7 according to the back and forth movement of the first lens group G1 and/or the second lens group G2 between the wide-angle zoom and the telephoto zoom.

Table 2 and Table 3 below describe the lens data of the lens assembly 500 illustrated in FIGS. 7 and 8. Table 2 includes data for the object-side surface S1 and the image sensor-side surface S2 of the 1-1th lens L11 included in the first lens group G1 of the lens assembly 500, the object-side surface S3 and the image sensor-side surface S4 of the 1-2th lens L12, and the object-side surface S5 and the image sensor-side surface S6 of the 1-3th lens L13. Further, Table 2 includes data for the object-side surface S7 and the image sensor-side surface S8 of the 2-1th lens L21 included in the second lens group G2 of the lens assembly 500, the object-side surface S9 and the image sensor-side surface S10 of the 2-2th lens L22, the object-side surface S11 and the image sensor-side surface S12 of the 2-3th lens L23, and the object-side surface S13 and the image sensor-side surface S14 of the 2-4th lens L24. Further, Table 2 may also include data for the object-side surface S15 and the image sensor-side surface S16 of the third lens L3 included in the third lens group G3, data for the object-side surface S17 and the image sensor-side surface S18 of the infrared cut filter F, and data for the imaging plane img of the image sensor IS. In Table 2, the 'radius of curvature' may be the radius of curvature of the lens surface measured at the point where the optical axis O-I passes, and the 'thickness or air gap' may be the thickness of the lenses L11, L12, L13, L21, L22, L23, L24, and L3 measured at the point where the optical axis O-I passes, the thickness of the infrared cut filter F, or the gap between the surfaces of two adjacent lenses (at least two lenses among L11, L12, L13, L21, L22, L23, L24, and L3). Further, Table 2 may include the refractive index, Abbe number, and focal length of the lenses L11, L12, L13, L21, L22, L23, L24, and L3.

[Table 2]

| lens surface (surface) | Radius of curvature (radius) | Thickness or air gap (thick or air gap) | Refractive index (nd) | Abbe number (vd) | Focal length (EFL) |
|---|---|---|---|---|---|
| obj | infinity | D0 | | | |
| S1 | -20.823 | 0.71 | 1.847 | 23.78 | 19.9 |
| S2 | -9.448 | 0.21 | | | |
| S3* | -13.648 | 0.50 | 1.544 | 55.92 | -27.6 |
| S4* | -152.955 | 0.10 | | | |
| S5* | 26.602 | 0.71 | 1.535 | 55.75 | -11.3 |
| S6* | 4.890 | D1 | | | |
| S7(stop) | 4.755 | 1.73 | 1.497 | 81.61 | 7.6 |
| S8 | -16.438 | 0.10 | | | |
| S9* | 4.964 | 1.52 | 1.535 | 55.75 | 8.2 |
| S10* | -32.852 | 0.13 | | | |
| S11 | -41.750 | 0.88 | 1.805 | 25.46 | -3.5 |
| S12 | 3.084 | 1.00 | | | |
| S13* | 17.037 | 1.10 | 1.650 | 21.53 | 10.6 |
| S14* | -11.209 | D2 | | | |
| S15* | -2.676 | 0.72 | 1.535 | 55.75 | 250.8 |
| S16* | -2.869 | 4.99 | | | |
| S17 | infinity | 0.21 | 1.517 | 64.2 | |
| S18 | infinity | D3 | | | |
| img | infinity | - | | | |

In Table 2 above, 'D1' may denote the air gap (or distance) between the image sensor-side surface S6 of the first lens (e.g., the 1-3th lens L13) from the image sensor-side of the first lens group G1 and the object-side surface S7 of the first lens (e.g., the 2-1th lens L21) from the object-side of the second lens group G2 in the lens assembly 500, 'D2' may denote the air gap (or distance) between the image sensor-side surface S14 of the first lens (e.g., the 2-4th lens L24) from the image sensor-side of the second lens group G2 and the object-side surface S15 of the lens (e.g., L3) of the third lens group G3, and 'D3' may denote the air gap (or distance) between the filter and the image sensor IS. In the embodiment of FIG. 8, D1, D2, and D3 may be shown in Table 3 below.

[Table 3]

| Air gap | Wide-angle zoom | mid-range zoom | Telephoto zoom |
|---|---|---|---|
| D1 | 6.74 | 3.48 | 1.10 |
| D2 | 2.70 | 4.75 | 7.65 |
| D3 | 0.60 | 0.60 | 0.61 |

Table 4 and Table 5 below describe the aspheric data of the lenses L11, L12, L13, L21, L22, L23, L24, and L3 of the lens assembly 500. The aspheric lens surface is a surface indicated by the symbol '*' in Table 2, and may be defined by the following Formula 4.

[Formula 4]

$$z = \frac{c'y^2}{1+\sqrt{1-(K+1)c'^2y^2}} + Ay^4 + By^6 + Cy^8 + Dy^{10} + Ey^{12} + Fy^{14} + Gy^{16} + Hy^{18} + Jy^{20}$$

Here, 'z' may be the distance in the optical axis O-I direction from the vertex of the lenses L11, L12, L13, L21, L22, L23, L24, and L3, 'y' the distance in the direction perpendicular to the optical axis O-I, 'c' the reciprocal (=1/radius) of the radius of curvature at the vertex of the lenses L11, L12, L13, L21, L22, L23, L24, and L3, 'K' the Conic constant, and 'A', 'B', 'C', 'D', 'E', 'F', 'G', 'H', and 'J' the aspheric coefficients in Table 4 and Table 5.

[Table 4]

| lens surface | K | A | B | C | D |
|---|---|---|---|---|---|
| S3 | 2.4720 | -1.4228E-03 | -7.9651E-04 | 1.4908E-04 | -1.0476E-05 |
| S4 | 0.0000 | 1.8748E-03 | -9.3922E-04 | 1.3988E-04 | -3.2991E-07 |
| S5 | 5.9131 | -8.1462E-03 | 1.8506E-03 | -2.6735E-04 | 3.0960E-05 |
| S6 | 0.1975 | -1.3981E-02 | 2.3070E-03 | -3.2233E-04 | 2.6892E-05 |
| S9 | -0.7356 | -3.2745E-04 | -1.1789E-04 | 3.4609E-06 | -3.6438E-06 |
| S10 | -8.5767 | 2.5584E-03 | -2.5365E-04 | 2.7983E-06 | -7.7190E-06 |
| S13 | -9.2258 | 3.6525E-04 | 2.1783E-05 | -2.5412E-04 | 5.8728E-05 |
| S14 | -10.0000 | -3.1780E-03 | -1.6415E-04 | -1.1725E-04 | 1.2383E-05 |
| S15 | -0.4786 | 6.5249E-03 | 4.0006E-04 | -3.8627E-05 | 3.6621E-06 |
| S16 | -0.3804 | 5.5346E-03 | 3.2347E-04 | -1.8713E-05 | 2.1054E-06 |

[Table 5]

| lens surface | E | F | G | H | J |
|---|---|---|---|---|---|
| S3 | 2.5985E-07 | 0.0000E+00 | 0.0000E+00 | 0.0000E+00 | 0.0000E+00 |
| S4 | -4.4451E-07 | 0.0000E+00 | 0.0000E+00 | 0.0000E+00 | 0.0000E+00 |
| S5 | -1.4523E-06 | 0.0000E+00 | 0.0000E+00 | 0.0000E+00 | 0.0000E+00 |
| S6 | -9.7920E-07 | 0.0000E+00 | 0.0000E+00 | 0.0000E+00 | 0.0000E+00 |
| S9 | 0.0000E+00 | 0.0000E+00 | 0.0000E+00 | 0.0000E+00 | 0.0000E+00 |
| S10 | 5.7051E-07 | 0.0000E+00 | 0.0000E+00 | 0.0000E+00 | 0.0000E+00 |
| S13 | -1.1140E-05 | 0.0000E+00 | 0.0000E+00 | 0.0000E+00 | 0.0000E+00 |
| S14 | -3.1759E-06 | 0.0000E+00 | 0.0000E+00 | 0.0000E+00 | 0.0000E+00 |
| S15 | 0.0000E+00 | 0.0000E+00 | 0.0000E+00 | 0.0000E+00 | 0.0000E+00 |
| S16 | 0.0000E+00 | 0.0000E+00 | 0.0000E+00 | 0.0000E+00 | 0.0000E+00 |

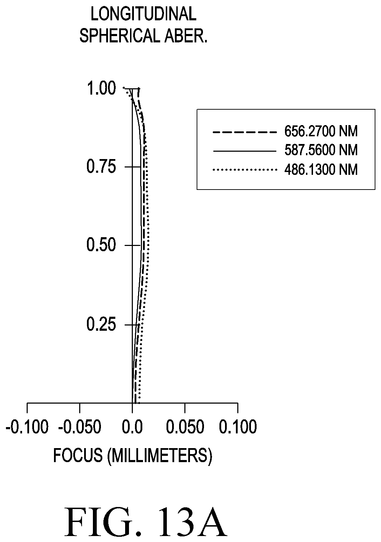

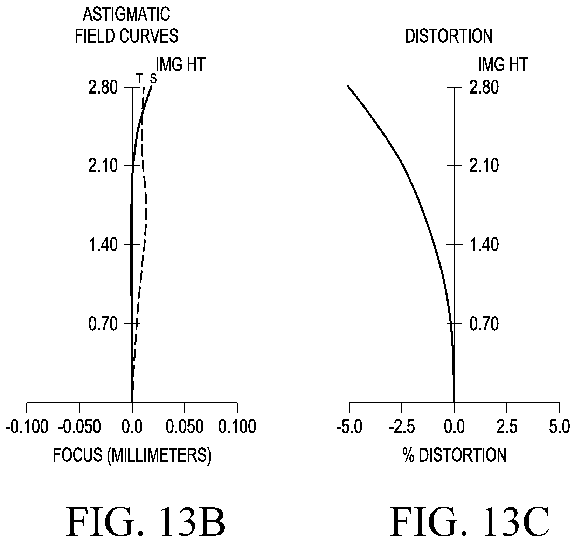

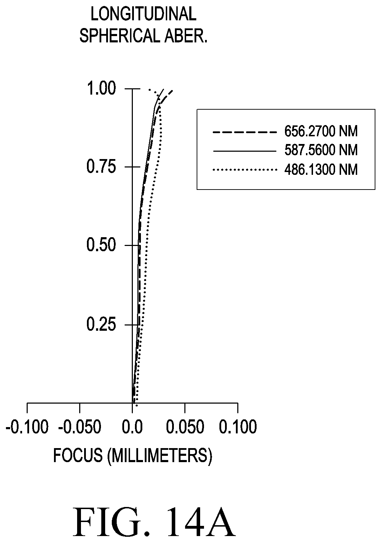

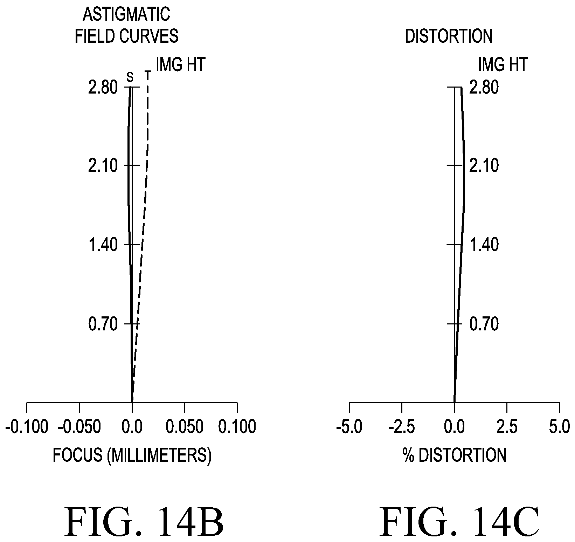

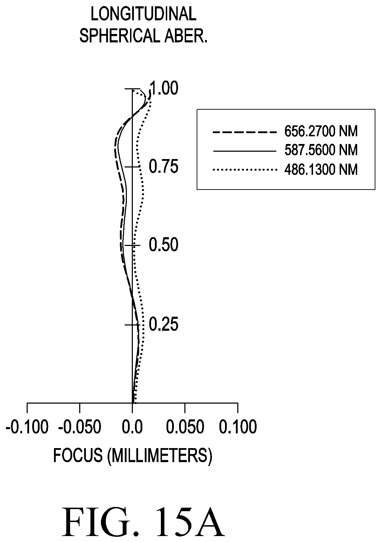

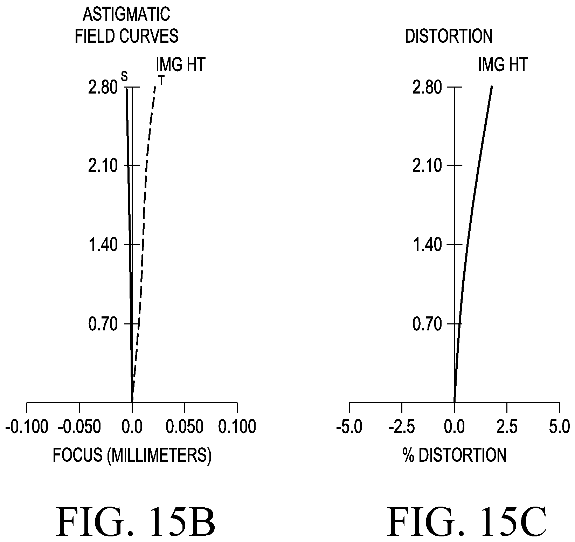

FIG. 12 is a view illustrating a configuration of a lens assembly, illustrating a lens (group) array at a wide-angle zoom, a mid-range zoom, and a telephoto zoom according to an embodiment of the disclosure. FIG. 13A is a graph illustrating spherical aberration of a lens assembly having the lens (group) array at the wide-angle zoom of FIG. 12. FIG. 13B is a graph illustrating astigmatism of a lens assembly having the lens (group) array at the wide-angle zoom of FIG. 12. FIG. 13C is a graph illustrating the distortion ratio of a lens assembly having the lens (group) array at the wide-angle zoom of FIG. 12. FIG. 14A is a graph illustrating spherical aberration of a lens assembly having the lens (group) array at the mid-range zoom of FIG. 12. FIG. 14B is a graph illustrating astigmatism of a lens assembly having the lens (group) array at the mid-range zoom of FIG. 12. FIG. 14C is a graph illustrating the distortion ratio of a lens assembly having the lens (group) array at the mid-range zoom of FIG. 12. FIG. 15A is a graph illustrating spherical aberration of a lens assembly having the lens (group) array at the telephoto zoom of FIG. 12. FIG. 15B is a graph illustrating astigmatism of a lens assembly having the lens (group) array at the telephoto zoom of FIG. 12. FIG. 15C is a graph illustrating the distortion ratio of a lens assembly having the lens (group) array at the telephoto zoom of FIG. 12. Referring to FIGS. 12 to 15C, the lens assembly 600 (e.g., the camera module 405 of FIG. 6 or the lens assembly 500 of FIG. 7) may satisfy at least one of the configurations mentioned in the above-described embodiments or conditions suggested through Formula 1, Formula 2, and Formula 3, and may include the reflective member R, the first lens group G1, the second lens group G2, the third lens group G3, the infrared cut filter F, and/or the image sensor IS which are sequentially arranged from the object obj side. In an embodiment, the lens assembly 600 may have the focal length adjustable within a range of about 8.5 to 18.9mm, the f-number adjustable in the range of about 2.5 to 3.9, and the angle of view adjustable in the range of about 38.3 to 24.8 according to the back and forth movement of the first lens group G1 and/or the second lens group G2 between the wide-angle zoom and the telephoto zoom.

Table 6 and Table 7 below describe the lens data of the lens assembly 600 illustrated in FIG. 12. The denotation for each lens surface in Table 6 below may be made in the same way as each lens surface in Table 2 described above.

[Table 6]

| lens surface | Radius of curvature | Thickness or air gap | Refractive index | Abbe number | Focal length |
|---|---|---|---|---|---|
| obj | infinity | D0 | | | |
| S1 | -18.570 | 0.71 | 1.847 | 23.78 | 21.7 |
| S2 | -9.389 | 0.43 | | | |
| S3* | -13.514 | 0.50 | 1.544 | 55.92 | -32.9 |
| S4* | -55.981 | 0.10 | | | |
| S5* | 30.296 | 0.68 | 1.535 | 55.75 | -11.1 |
| S6* | 4.940 | D1 | | | |
| S7(stop) | 4.683 | 1.80 | 1.497 | 81.61 | 7.7 |
| S8 | -18.071 | 0.10 | | | |
| S9* | 4.927 | 1.45 | 1.535 | 55.75 | 8.1 |
| S10* | -32.971 | 0.18 | | | |
| S11 | -33.018 | 0.88 | 1.805 | 25.46 | -3.4 |
| S12 | 3.066 | 1.00 | | | |
| S13* | 15.303 | 1.08 | 1.650 | 21.53 | 10.0 |
| S14* | -10.919 | D2 | | | |
| S15* | -2.862 | 0.75 | 1.535 | 55.75 | 163.9 |
| S16* | -3.025 | 4.45 | | | |
| S17 | infinity | 0.21 | 1.517 | 64.2 | |
| S18 | infinity | D3 | | | |
| img | infinity | - | | | |

In Table 6 above, 'D1' may denote the air gap (or distance) between the image sensor-side surface S6 of the first lens (e.g., the 1-3th lens L13) from the image sensor-side of the first lens group G1 and the object-side surface S7 of the first lens (e.g., the 2-1th lens L21) from the object-side of the second lens group G2 in the lens assembly 600, 'D2' may denote the air gap (or distance) between the image sensor-side surface S14 of the first lens (e.g., the 2-4th lens L24) from the image sensor-side of the second lens group G2 and the object-side surface S15 of the lens (e.g., L3) of the third lens group G3, and 'D3' may denote the air gap (or distance) between the filter and the image sensor IS. In the embodiment of FIG. 12, D1, D2, and D3 may be shown in Table 7 below.

[Table 7]

| Air gap | Wide-angle zoom | mid-range zoom | Telephoto zoom |
|---|---|---|---|
| D1 | 8.63 | 4.11 | 1.10 |

(continued)

| Air gap | Wide-angle zoom | mid-range zoom | Telephoto zoom |
|---------|-----------------|----------------|----------------|
| D2 | 2.46 | 4.76 | 8.17 |
| D3 | 0.60 | 0.60 | 0.60 |

Table 8 and Table 9 below describe the aspheric coefficients of the lenses L11, L12, L13, L21, L22, L23, L24, and L3 of the lens assembly 600 illustrated in FIG. 12.

[Table 8]

| lens surface | K | A | B | C | D |
|--------------|-----|-----|-----|-----|-----|
| S3 | 2.4526 | -1.4629E-03 | -7.3919E-04 | 1.2987E-04 | -8.2647E-06 |
| S4 | 0.0000 | 1.6137E-03 | -6.9700E-04 | 7.2121E-05 | 6.9700E-06 |
| S5 | 2.8131 | -8.6503E-03 | 2.1437E-03 | -3.3676E-04 | 3.8438E-05 |
| S6 | 0.2100 | -1.4214E-02 | 2.4036E-03 | -3.3995E-04 | 2.8758E-05 |
| S9 | -0.7450 | -3.2589E-04 | -1.3250E-04 | 3.4469E-06 | -3.1936E-06 |
| S10 | -0.1561 | 2.3308E-03 | -2.7286E-04 | 1.4038E-05 | -5.9354E-06 |
| S13 | -9.9995 | 2.0365E-04 | 3.4129E-05 | -2.7356E-04 | 7.0301E-05 |
| S14 | -9.9468 | -3.4536E-03 | -1.2510E-04 | -1.5513E-04 | 2.6675E-05 |
| S15 | -0.5552 | 7.8413E-03 | 4.4334E-04 | -2.4256E-05 | -4.1168E-07 |
| S16 | -0.4608 | 6.8284E-03 | 3.3428E-04 | -1.4369E-06 | -8.7585E-07 |

[Table 9]

| lens surface | E | F | G | H | J |
|--------------|-----|-----|-----|-----|-----|
| S3 | 1.7159E-07 | 0.0000E+00 | 0.0000E+00 | 0.0000E+00 | 0.0000E+00 |
| S4 | -7.1158E-07 | 0.0000E+00 | 0.0000E+00 | 0.0000E+00 | 0.0000E+00 |
| S5 | -1.7334E-06 | 0.0000E+00 | 0.0000E+00 | 0.0000E+00 | 0.0000E+00 |
| S6 | -1.0462E-06 | 0.0000E+00 | 0.0000E+00 | 0.0000E+00 | 0.0000E+00 |
| S9 | 0.0000E+00 | 0.0000E+00 | 0.0000E+00 | 0.0000E+00 | 0.0000E+00 |
| S10 | 3.4384E-07 | 0.0000E+00 | 0.0000E+00 | 0.0000E+00 | 0.0000E+00 |
| S13 | -1.1777E-05 | 0.0000E+00 | 0.0000E+00 | 0.0000E+00 | 0.0000E+00 |
| S14 | -4.7029E-06 | 0.0000E+00 | 0.0000E+00 | 0.0000E+00 | 0.0000E+00 |
| S15 | 0.0000E+00 | 0.0000E+00 | 0.0000E+00 | 0.0000E+00 | 0.0000E+00 |
| S16 | 0.0000E+00 | 0.0000E+00 | 0.0000E+00 | 0.0000E+00 | 0.0000E+00 |

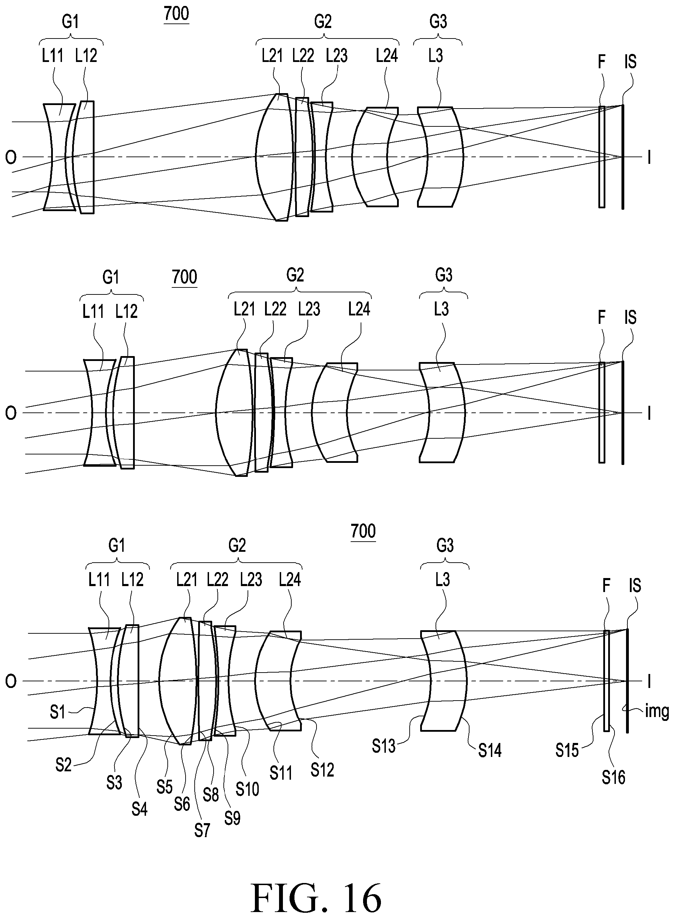

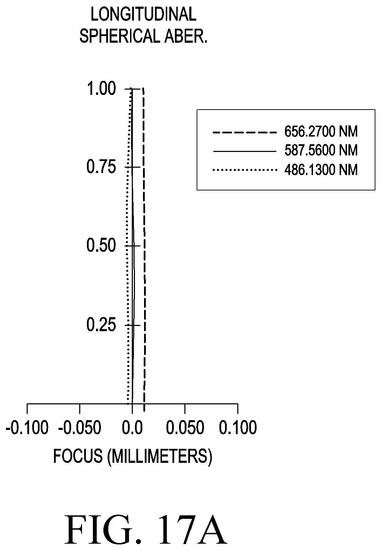

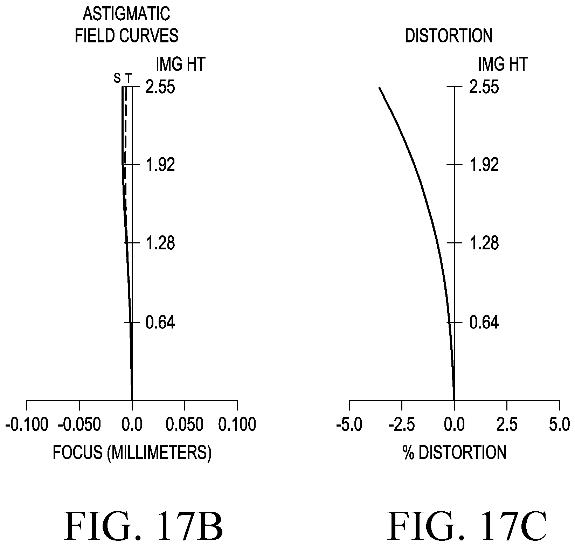

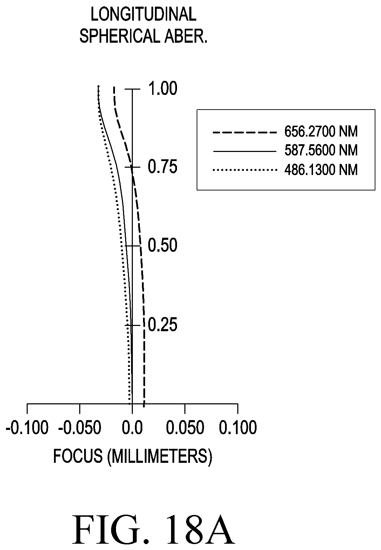

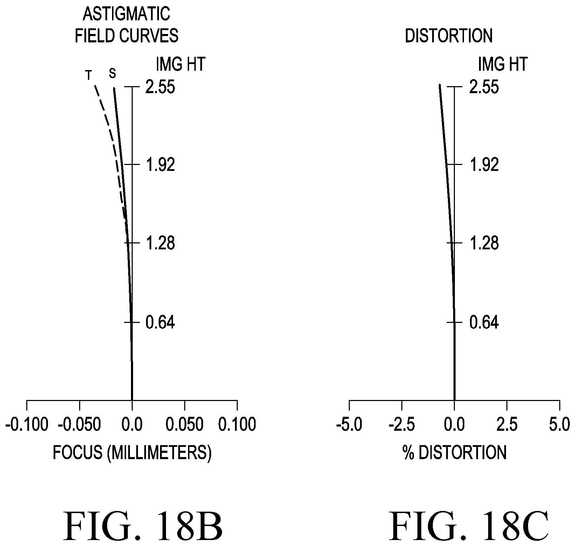

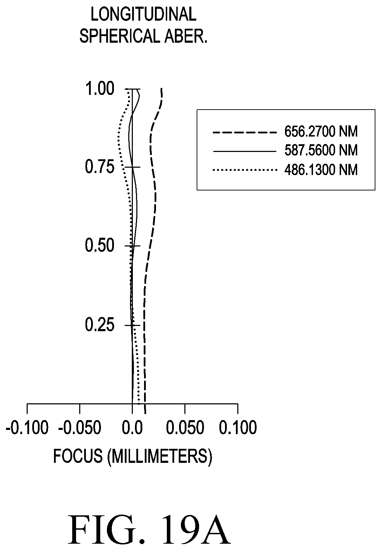

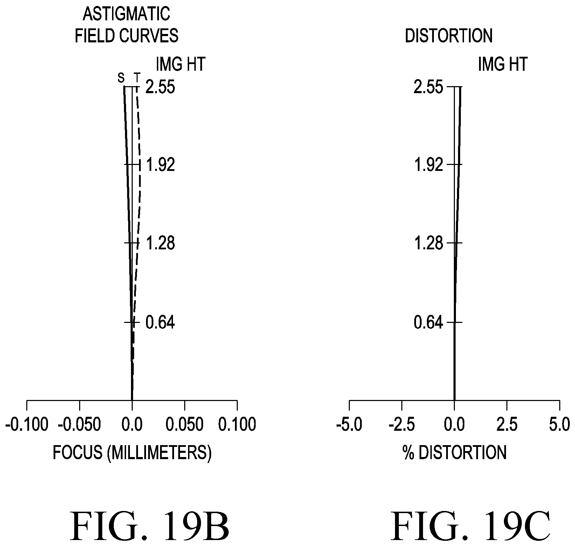

FIG. 16 is a view illustrating a configuration of a lens assembly, illustrating a lens (group) array at a wide-angle zoom, a mid-range zoom, and a telephoto zoom according to an embodiment of the disclosure. FIG. 17A is a graph illustrating spherical aberration of a lens assembly having the lens (group) array at the wide-angle zoom of FIG. 16. FIG. 17B is a graph illustrating astigmatism of a lens assembly having the lens (group) array at the wide-angle zoom of FIG. 16. FIG. 17C is a graph illustrating the distortion ratio of a lens assembly having the lens (group) array at the wide-angle zoom of FIG. 16. FIG. 18A is a graph illustrating spherical aberration of a lens assembly having the lens (group) array at the mid-range zoom of FIG. 16. FIG. 18B is a graph illustrating astigmatism of a lens assembly having the lens (group) array at the mid-range zoom of FIG. 16. FIG. 18C is a graph illustrating the distortion ratio of a lens assembly having the lens (group) array at the mid-range zoom of FIG. 16. FIG. 19A is a graph illustrating spherical aberration of a lens assembly having the lens (group) array at the telephoto zoom of FIG. 16. FIG. 19B is a graph illustrating astigmatism of a lens assembly having the lens (group) array at the telephoto zoom of FIG. 16. FIG. 19C is a graph illustrating the distortion ratio of a lens assembly having the lens (group) array at the telephoto zoom of FIG. 16. Unlike in the embodiments of FIGS. 8 to 12, FIG. 16 illustrates an embodiment of a lens assembly 700 including two lenses (e.g., a 1-1th lens L11 and a 1-2th lens L12) as the first lens group G1. In an embodiment, the 1-1th lens L11 may be a bi-concave lens in which the object-side O surface S1 and the image sensor-side I surface S2 both are concave, and the 1-2th lens L12 may include a convex surface S3 on the object-side O. In the embodiment of FIG. 16, the first lens group G1 overall has a negative refractive power, and the 1-1th lens L11 may have a negative refractive power, and the 1-2th lens L12 may have a positive refractive power. In this case, the 1-2th lens L12 may be implemented as a lens having a glass material to suppress resolution deviation.

Referring to FIGS. 16 to 19C, the lens assembly 700 (e.g., the camera module 405 of FIG. 6 or the lens assembly 500 of FIG. 7) may satisfy at least one of the configurations mentioned in the above-described embodiments or conditions suggested through Formula 1, Formula 2, and Formula 3, and may include the reflective member R, the first lens group G1, the second lens group G2, the third lens group G3, the infrared cut filter F, and/or the image sensor IS which are sequentially arranged from the object obj side. In an embodiment, the lens assembly 700 may have the focal length adjustable within a range of about 9.6 to 26.5mm, the f-number adjustable in the range of about 2.7 to 3.9, and the angle of view adjustable in the range of about 30.9 to 15.3 according to the back and forth movement of the first lens group G1 and/or the second lens group G2 between the wide-angle zoom and the telephoto zoom.

Table 10 and Table 11 below describe the lens data of the lens assembly 700 illustrated in FIG. 16. Table 10 includes data for the object-side surface S1 of the 1-1th lens L11 and the image sensor-side surface S2 included in the first lens group G1 of the lens assembly 700 and the object-side surface S3 and the image sensor-side surface S4 of the 1-2th lens L12. Further, Table 10 includes data for the object-side surface S5 and the image sensor-side surface S6 of the 2-1th lens L21 included in the second lens group G2 of the lens assembly 500, the object-side surface S7 and the image sensor-side surface S8 of the 2-2th lens L22, the object-side surface S9 and the image sensor-side surface S10 of the 2-3th lens L23, and the object-side surface S11 and the image sensor-side surface S12 of the 2-4th lens L24. Further, Table 10 may also include data for the object-side surface S13 and the image sensor-side surface S14 of the third lens L3 included in the third lens group G3, data for the object-side surface S15 and the image sensor-side surface S16 of the infrared cut filter F, and data for the imaging plane img of the image sensor IS.

[Table 10]

| lens surface | Radius of curvature | Thickness or air gap | Refractive index | Abbe number | Focal length |
|---|---|---|---|---|---|
| obj | infinity | D0 | | | |
| S1* | -8.523 | 0.65 | 1.544 | 55.99 | -6.9 |
| S2* | 6.844 | 0.40 | | | |
| S3 | 9.063 | 1.00 | 1.690 | 31.14 | 14.4 |
| S4 | 97.384 | D1 | | | |
| S5(stop) | 5.036 | 1.89 | 1.497 | 81.61 | 8.4 |
| s6 | -21.286 | 0.10 | | | |
| S7* | 76.370 | 0.89 | 1.544 | 55.99 | 21.3 |
| S8* | -13.604 | 0.10 | | | |
| S9 | -18.622 | 0.55 | 1.690 | 31.14 | -9.1 |
| S10 | 9.552 | 1.35 | | | |
| S11* | 4.012 | 1.78 | 1.544 | 55.99 | 21.9 |
| S12* | 5.100 | D2 | | | |
| S13* | -4.962 | 1.80 | 1.544 | 55.99 | 1280.8 |
| S14* | -5.556 | 6.81 | | | |
| S15 | infinity | 0.21 | 1.517 | 64.2 | |
| S16 | infinity | D3 | | | |
| img | infinity | - | | | |

In Table 10 above, 'D1' may denote the air gap (or distance) between the image sensor-side surface S4 of the first lens (e.g., the 1-2th lens L12) from the image sensor-side of the first lens group G1 and the object-side surface S5 of the first lens (e.g., the 2-1th lens L21) from the object-side of the second lens group G2 in the lens assembly 700, 'D2' may denote the air gap (or distance) between the image sensor-side surface S12 of the first lens (e.g., the 2-4th lens L24) from the image sensor-side of the second lens group G2 and the object-side surface S13 of the lens (e.g., L3) of the third lens group G3, and 'D3' may denote the air gap (or distance) between the filter and the image sensor IS. In the embodiment of FIG. 16, D1, D2, and D3 may be shown in Table 11 below.

[Table 11]

| Air gap | Wide-angle zoom | mid-range zoom | Telephoto zoom |
|---------|-----------------|----------------|----------------|
| D1 | 8.33 | 4.13 | 1.15 |
| D2 | 2.02 | 4.18 | 7.22 |
| D3 | 0.95 | 0.95 | 0.95 |

Table 12 and Table 13 below describe the aspheric coefficients of the lenses L11, L12, L13, L21, L22, L23, L24, and L3 of the lens assembly 700 illustrated in FIG. 16.

[Table 12]

| lens surface | K | A | B | C | D |
|--------------|-----|-----|-----|-----|-----|
| S1 | 0.0000 | 5.5631E-04 | -4.7177E-05 | 1.3292E-06 | 3.1804E-07 |
| S2 | 0.0000 | 1.0658E-04 | -4.3067E-05 | -1.1387E-06 | 5.9134E-07 |
| S7 | 0.0000 | -4.0199E-04 | 1.4018E-05 | -3.0373E-06 | 5.4231E-07 |
| S8 | 0.0000 | 4.0547E-04 | 1.2411E-05 | 1.2898E-06 | 2.7929E-07 |
| S11 | -0.0032 | -6.9106E-04 | -1.3231E-04 | -1.0069E-05 | 6.6560E-07 |
| S12 | -0.1528 | 2.7912E-03 | -5.3915E-05 | -2.3281E-05 | 2.3235E-06 |
| S13 | 2.2696 | 3.8613E-03 | 3.0162E-04 | -2.3279E-05 | 8.5862E-06 |
| S14 | 2.1818 | 2.6870E-03 | 1.7180E-04 | -1.2119E-05 | 2.9571E-06 |

[Table 13]

| lens surface | E | F | G | H | J |
|--------------|-----|-----|-----|-----|-----|
| S1 | -2.4856E-08 | 0.0000E+00 | 0.0000E+00 | 0.0000E+00 | 0.0000E+00 |
| S2 | -3.6441E-08 | 0.0000E+00 | 0.0000E+00 | 0.0000E+00 | 0.0000E+00 |
| S7 | -1.6646E-08 | 0.0000E+00 | 0.0000E+00 | 0.0000E+00 | 0.0000E+00 |
| S8 | -8.2337E-09 | 0.0000E+00 | 0.0000E+00 | 0.0000E+00 | 0.0000E+00 |
| S11 | -1.9736E-07 | 0.0000E+00 | 0.0000E+00 | 0.0000E+00 | 0.0000E+00 |
| S12 | -5.6241E-07 | 0.0000E+00 | 0.0000E+00 | 0.0000E+00 | 0.0000E+00 |
| S13 | 0.0000E+00 | 0.0000E+00 | 0.0000E+00 | 0.0000E+00 | 0.0000E+00 |
| S14 | 0.0000E+00 | 0.0000E+00 | 0.0000E+00 | 0.0000E+00 | 0.0000E+00 |

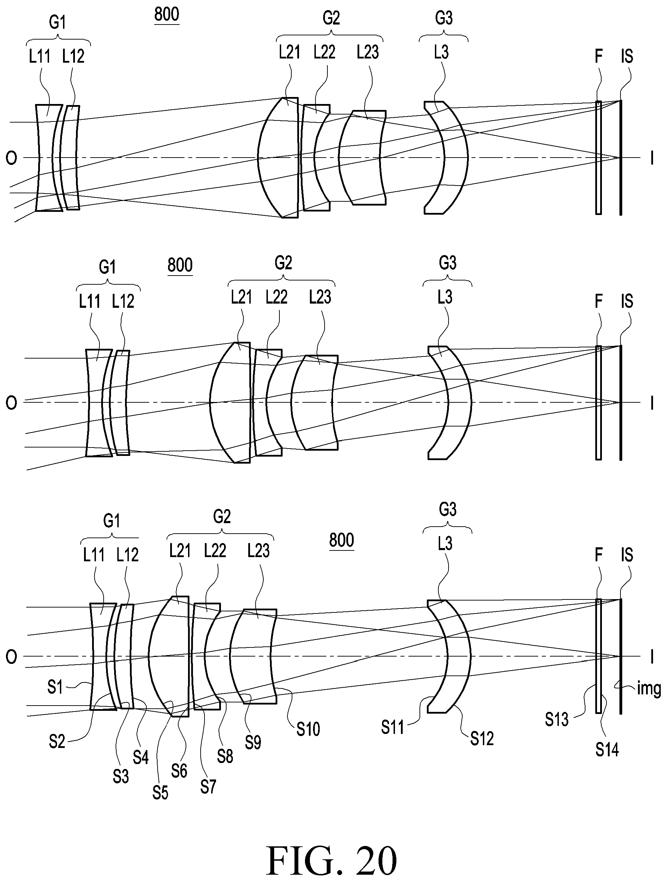

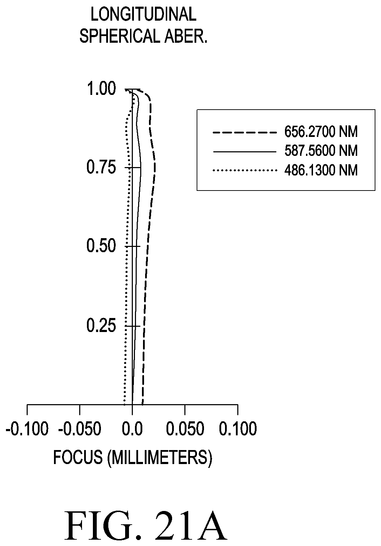

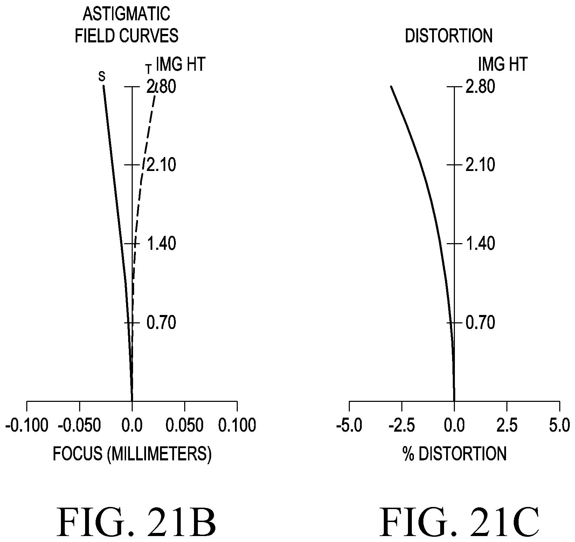

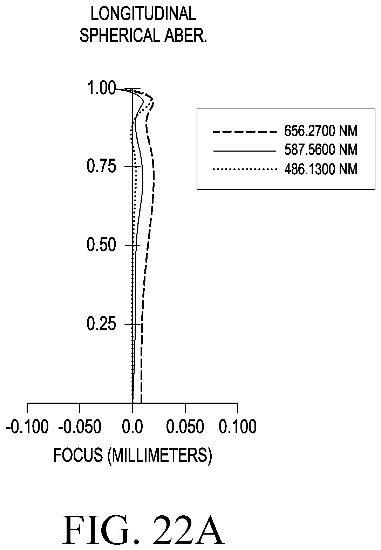

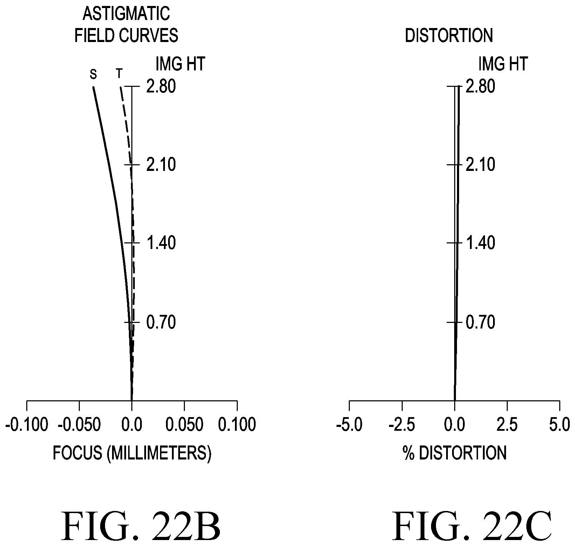

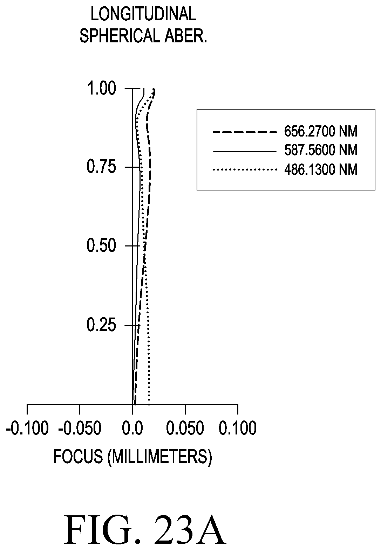

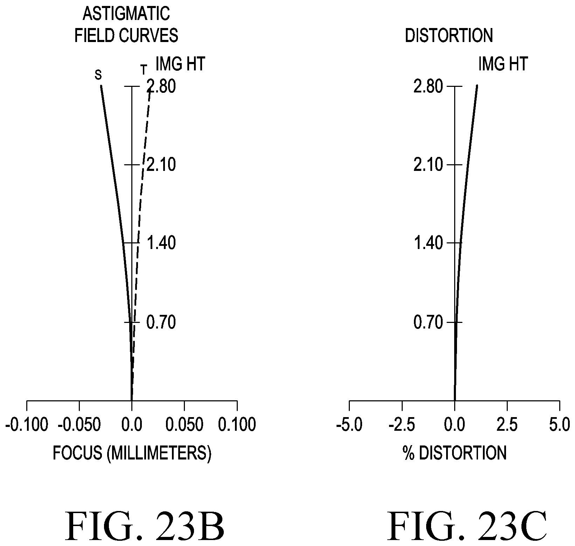

FIG. 20 is a view illustrating a configuration of a lens assembly, illustrating a lens (group) array at a wide-angle zoom, a mid-range zoom, and a telephoto zoom according to an embodiment of the disclosure. FIG. 21A is a graph illustrating spherical aberration of a lens assembly having the lens (group) array at the wide-angle zoom of FIG. 20. FIG. 21B is a graph illustrating astigmatism of a lens assembly having the lens (group) array at the wide-angle zoom of FIG. 20. FIG. 21C is a graph illustrating the distortion ratio of a lens assembly having the lens (group) array at the wide-angle zoom of FIG. 20. FIG. 22A is a graph illustrating spherical aberration of a lens assembly having the lens (group) array at the mid-range zoom of FIG. 20. FIG. 22B is a graph illustrating astigmatism of a lens assembly having the lens (group) array at the mid-range zoom of FIG. 20. FIG. 22C is a graph illustrating the distortion ratio of a lens assembly having the lens (group) array at the mid-range zoom of FIG. 20. FIG. 23A is a graph illustrating spherical aberration of a lens assembly having the lens (group) array at the telephoto zoom of FIG. 20. FIG. 23B is a graph illustrating astigmatism of a lens assembly having the lens (group) array at the telephoto zoom of FIG. 20. FIG. 23C is a graph illustrating the distortion ratio of a lens assembly having the lens (group) array at the telephoto zoom of FIG. 20. Unlike the embodiments of FIGS. 8, 12, and 16, FIG. 20 illustrates an embodiment of a lens assembly 800 including two lenses (e.g., a 1-1th lens L11 and a 1-2th lens L12) as the first lens group G1, and three lenses (e.g., a 2-1th lens L21, a 2-2th lens L22, and a 2-3th lens L23) as the second lens group G2. In an embodiment, the 1-1th lens L11 may be a bi-concave lens in which the object-side surface S1 and the image sensor-side surface S2 both are concave, and the 1-2th lens L12 may include a convex surface S3 on the object-side. In the embodiment of FIG. 20, the first lens group G1 overall has a negative refractive power, and the 1-1th lens L11 may have a negative refractive power, and the 1-2th lens L12 may have a positive refractive power. In the embodiment of FIG. 20, all of the lenses included in the first lens group G1, the second lens group G2, and the third lens group G3 may be implemented as lenses having a synthetic resin material.

Referring to FIGS. 20 to 23C, the lens assembly 800 (e.g., the camera module 405 of FIG. 6 or the lens assembly 500 of FIG. 7) may satisfy at least one of the configurations mentioned in the above-described embodiments or conditions suggested through Formula 1, Formula 2, and Formula 3, and may include the reflective member R, the first lens group G1, the second lens group G2, the third lens group G3, the infrared cut filter F, and/or the image sensor IS which are sequentially arranged from the object obj side. In an embodiment, the lens assembly 800 may have the focal length adjustable within a range of about 9.9 to 18.9mm, the f-number adjustable in the range of about 2.7 to 3.9, and the angle of view adjustable in the range of about 32.5 to 16.6 according to the back and forth movement of the first lens group G1 and/or the second lens group G2 between the wide-angle zoom and the telephoto zoom.

Table 14 and Table 15 below describe the lens data of the lens assembly 800 illustrated in FIG. 20. Table 14 includes data for the object-side surface S1 of the 1-1th lens L11 and the image sensor-side surface S2 included in the first lens group G1 of the lens assembly 800 and the object-side surface S3 and the image sensor-side surface S4 of the 1-2th lens L12. Further, Table 14 includes data for the object-side surface S5 and the image sensor-side surface S6 of the 2-1th lens L21 included in the second lens group G2 of the lens assembly 500, the object-side surface S7 and the image sensor-side surface S8 of the 2-2th lens L22, and the object-side surface S9 and the image sensor-side surface S10 of the 2-3th lens L23. Further, Table 14 may also include data for the object-side surface S11 and the image sensor-side surface S12 of the third lens L3 included in the third lens group G3, data for the object-side surface S13 and the image sensor-side surface S14 of the infrared cut filter F, and data for the imaging plane img of the image sensor IS.

[Table 14]

| lens surface | Radius of curvature | Thickness or air gap | Refractive index | Abbe number | Focal length |
|---|---|---|---|---|---|
| obj | infinity | D0 | | | |
| S1* | -33.739 | 0.65 | 1.544 | 55.99 | -11.0 |
| S2* | 7.301 | 0.38 | | | |
| S3* | 8.268 | 0.80 | 1.633 | 23.1 | 27.4 |
| S4* | 15.212 | D1 | | | |
| S5(stop) | 4.159 | 2.00 | 1.544 | 55.99 | 7.2 |
| S6* | -51.423 | 0.10 | | | |
| S7* | 18.037 | 0.65 | 1.611 | 26 | -7.9 |
| S8* | 3.755 | 1.26 | | | |
| S9* | 3.982 | 1.98 | 1.544 | 55.99 | 13.8 |
| S10* | 6.980 | D2 | | | |
| S11* | -3.709 | 1.22 | 1.535 | 55.75 | 37.9 |
| S12* | -3.495 | 6.21 | | | |
| S13 | infinity | 0.21 | 1.517 | 64.2 | |
| S14 | infinity | D3 | | | |
| img | | - | | | |

In Table 14 above, 'D1' may denote the air gap (or distance) between the image sensor-side surface S4 of the first lens (e.g., the 1-2th lens L12) from the image sensor-side of the first lens group G1 and the object-side surface S5 of the first lens (e.g., the 2-1th lens L21) from the object-side of the second lens group G2 in the lens assembly 800, 'D2' may denote the air gap (or distance) between the image sensor-side surface S10 of the first lens (e.g., the 2-3th lens L23) from the image sensor-side of the second lens group G2 and the object-side surface S11 of the lens (e.g., L3) of the third lens group G3, and 'D3' may denote the air gap (or distance) between the filter and the image sensor IS. In the embodiment of FIG. 20, D1, D2, and D3 may be shown in Table 15 below.

[Table 15]

| air gap | wide-angle zoom | mid-range zoom | telephoto zoom |
|---|---|---|---|
| D1 | 8.98 | 4.13 | 0.93 |
| D2 | 3.17 | 5.55 | 8.56 |
| D3 | 1.01 | 1.01 | 1.01 |

Table 16 and Table 17 below describe the aspheric coefficients of the lenses L11, L12, L21, L22, L23, L24, and L3 of the lens assembly 800 illustrated in FIG. 20.

[Table 16]

| lens surface | K | A | B | C | D |
|---|---|---|---|---|---|
| S1 | -4.4997 | -1.5966E-04 | -7.4189E-05 | 2.8080E-06 | -2.3407E-08 |
| S2 | -0.0009 | 9.1622E-05 | -1.1106E-04 | -5.5229E-06 | 1.3022E-06 |
| S3 | 0.0027 | -9.8163E-04 | -5.5975E-05 | 1.9160E-06 | 4.1074E-07 |
| S4 | 0.5839 | -1.3306E-03 | -1.6241E-05 | 2.6972E-06 | 4.0637E-07 |
| S5 | -0.0012 | -3.8249E-04 | 8.6153E-06 | -4.6532E-06 | 8.6841E-07 |
| S6 | 0.0000 | 9.3047E-05 | 3.5563E-05 | 6.4730E-06 | -6.1159E-07 |
| S7 | 0.0000 | -9.9436E-05 | -1.9978E-05 | 7.4048E-08 | -3.0167E-07 |
| S8 | 0.0000 | 4.6313E-04 | 4.1495E-05 | -7.1968E-06 | 2.9063E-07 |
| S9 | 0.0000 | -7.1768E-04 | -4.5562E-05 | -6.9748E-06 | -3.1847E-07 |
| S10 | 0.1223 | 1.8511E-03 | 1.6262E-05 | -8.7901E-06 | 2.8183E-07 |
| S11 | 0.1413 | -1.0658E-04 | -3.4832E-06 | 3.6549E-07 | -6.5960E-07 |
| S12 | -0.1675 | 5.0004E-04 | 1.0149E-05 | 1.6766E-07 | -5.8325E-08 |

[Table 17]

| lens surface | E | F | G | H | J |
|---|---|---|---|---|---|
| S1 | 1.8295E-08 | 0.0000E+00 | 0.0000E+00 | 0.0000E+00 | 0.0000E+00 |
| S2 | -3.4368E-09 | 0.0000E+00 | 0.0000E+00 | 0.0000E+00 | 0.0000E+00 |
| S3 | -3.3582E-09 | 0.0000E+00 | 0.0000E+00 | 0.0000E+00 | 0.0000E+00 |
| S4 | -5.0914E-08 | 9.8762E-10 | 0.0000E+00 | 0.0000E+00 | 0.0000E+00 |
| S5 | -2.7112E-08 | 0.0000E+00 | 0.0000E+00 | 0.0000E+00 | 0.0000E+00 |
| S6 | -4.7798E-08 | 0.0000E+00 | 0.0000E+00 | 0.0000E+00 | 0.0000E+00 |
| S7 | -1.3473E-07 | 0.0000E+00 | 0.0000E+00 | 0.0000E+00 | 0.0000E+00 |
| S8 | 2.0160E-07 | 0.0000E+00 | 0.0000E+00 | 0.0000E+00 | 0.0000E+00 |
| S9 | 7.3669E-08 | 0.0000E+00 | 0.0000E+00 | 0.0000E+00 | 0.0000E+00 |
| S10 | 6.0885E-08 | 0.0000E+00 | 0.0000E+00 | 0.0000E+00 | 0.0000E+00 |
| S11 | 0.0000E+00 | 0.0000E+00 | 0.0000E+00 | 0.0000E+00 | 0.0000E+00 |
| S12 | 0.0000E+00 | 0.0000E+00 | 0.0000E+00 | 0.0000E+00 | 0.0000E+00 |

As described above, there may be provided a lens assembly 500; 600; 700; 800, comprising an image sensor IS, a first lens group G1 disposed first from a object-side among three lens groups G1, G2, G3 sequentially arranged from the object-side to the image sensor-side along an optical axis O-I direction, the first lens group including a plurality of lenses and having a negative refractive power, a second lens group G2 disposed to move back and forth along the optical axis direction between the first lens group among the three lens groups and the image sensor, the second lens group including a plurality of lenses and having a positive refractive power, and a third lens group G3 disposed between the second lens group among the three lens groups and the image sensor, the third lens group G3 having a positive refractive power, wherein, when the lens assembly is in a zooming operation, the lens assembly is configured such that an gap between the first lens group and the second lens group is reduced, and the third lens group is fixed, and wherein the lens assembly is configured to satisfy Formula 1.

[Formula 1]

$$-1.9 < \frac{f1G}{fw} < -1.1$$

Here, 'f1G' is a total focal length of the first lens group, and 'fw' is a total composite focal length of the lens assembly at a wide-angle zoom.

According to an embodiment, the gap between the first lens group G1 and the second lens group G2 may be reduced as the first lens group G1 and the second lens group G2 move back and forth in the zooming operation.

According to an embodiment, in a state between the wide-angle zoom and a telephoto zoom of the zooming operation, the first lens group G1 may move by a predetermined distance in a first direction toward the second lens group G2 along the optical-axis direction and then move in a second direction away from the second lens group G2 along the optical-axis direction, and the second lens group G2 may continuously move toward the first lens group along the optical-axis direction.

According to an embodiment, in the first lens group G1, a lens L11 disposed first from the object-side may have a positive refractive power, and a lens L12, L13 disposed first from the image sensor-side may have a negative refractive power.

According to an embodiment, in the first lens group G1, a lens L11 disposed first from the object-side may have a negative refractive power, and a lens L12 disposed first from the image sensor-side may have a positive refractive power.

According to an embodiment, a focus adjustment operation may be performed using the first lens group G1.

According to an embodiment, the first lens group G1 may include a glass lens.

According to an embodiment, the second lens group G2 may satisfy Formula 2.

[Formula 2]

$$0.5 \leq \frac{f2G}{\sqrt{fw+ft}} \leq 0.8$$

Here, 'f2G' is a total focal length of the second lens group (G2), 'fw' is a total composite focal length of the lens assembly (500; 600; 700; 800) at a wide-angle zoom, and 'ft' is a total composite focal length of the lens assembly (500; 600; 700; 800) at a telephoto zoom.

According to an embodiment, in the second lens group G2, a first lens e.g., L23, L24 from the image sensor-side may have a positive refractive power.

According to an embodiment, the second lens group G2 may include a glass lens.

According to an embodiment, a reflective member R may be disposed on the object-side of the first lens group G1.

According to an embodiment, the reflective member R may perform an image stabilization function.

According to an embodiment, any one of the first lens group G1 and the second lens group G2 may have an effective diameter satisfying Formula 3.

[Formula 3]

$$0.4 \leq \frac{Dy}{Dx} \leq 0.98$$

Here, Dy is an effective diameter length of a short side of an aperture or a lens, and Dx is an effective diameter length of a long side of the aperture or the lens.

According to an embodiment, the lens assembly may constitute a refractive optical system having an optical axis substantially perpendicular to an incident direction of light.

According to an embodiment, the lens assembly may constitute a telephoto camera whose magnification is adjustable within an angle of view of 40 degrees or less.

According to an embodiment of the disclosure, there may be provided a lens assembly 500; 600; 700; 800 comprising an image sensor IS, a first lens group G1 disposed first from a object-side among three lens groups G1, G2, G3 sequentially arranged along an optical axis O-I direction toward the image sensor-side from the object-side and including a plurality of lenses, a second lens group G2 disposed to move back and forth along the optical-axis direction between the first lens group among the three lens groups and the image sensor and including a plurality of lenses, and a third lens group G3 disposed between the second lens group among the three lens groups and the image sensor, wherein a reflective member R is disposed on the object-side of the first lens group G1, wherein the lens assembly is configured such that an gap between the first lens group G1 and the second lens group G2 is reduced as the first lens group G1 and the second lens group G2 move back and forth in a zooming operation, and the third lens group G3 is fixed, and the lens assembly is configured to satisfy Formula 1.

[Formula 1]

$$-1.9 < \frac{f1G}{fw} < -1.1$$

Here, 'f1G' is a total focal length of the first lens group, and 'fw' is a total composite focal length of the lens assembly at a wide-angle zoom.

According to an embodiment, between the wide-angle zoom and a telephoto zoom of the zooming operation, the first lens group G1 may move by a predetermined distance in a first direction toward the second lens group G2 along the optical-axis direction and then move in a second direction away from the second lens group G2 along the optical-axis direction, and the second lens group G2 may continuously move toward the first lens group along the optical-axis direction.

According to an embodiment, the first lens group G1 may have a negative refractive power, the second lens group G2 may have a positive refractive power, and the third lens group G3 may have a positive refractive power.

According to an embodiment, in the first lens group G1, a lens L11 disposed first from the object-side may have a negative refractive power, and a lens L12; L13 disposed first from the image sensor-side may have a positive refractive power.

According to an embodiment, the first lens group G1 may include a glass lens.

According to an embodiment, the second lens group G2 may satisfy Formula 2.

[Formula 2]

$$0.5 \leq \frac{f2G}{\sqrt{fw+ft}} \leq 0.8$$

Here, 'f2G' is a total focal length of the second lens group (G2), 'fw' is a total composite focal length of the lens assembly (500; 600; 700; 800) at a wide-angle zoom, and 'ft' is a total composite focal length of the lens assembly (500; 600; 700; 800) at a telephoto zoom.

According to an embodiment, the second lens group G2 may include a glass lens.

According to an embodiment, the reflective member R may perform an image stabilization function.

According to an embodiment, any one of the first lens group G1 and the second lens group G2 may have an effective diameter satisfying Formula 3.

[Formula 3]

$$0.4 \leq \frac{Dy}{Dx} \leq 0.98$$

Here, Dy is an effective diameter length of a short side of an aperture or a lens, and Dx is an effective diameter length of a long side of the aperture or the lens.

According to an embodiment, at least one of the first lens group G1, the second lens group G2, and the third lens group G3 may have a D-cut cross section.

According to various embodiments of the disclosure, the lens assembly implements a zoom function using the first or second lens group while allowing the object-side third lens group to remain in a static state, rendering it easy to make it smaller. For example, the lens assembly may easily be equipped in a small and/or lightweight electronic device and contribute to expanding the optical functionality or enhancing the optical performance of the electronic device. Other various effects may be provided directly or indirectly in the disclosure.

While the disclosure has been described and shown in connection with an embodiment, it should be appreciated that various embodiments are intended as limiting the invention but as illustrative. It will be apparent to one of ordinary skill in the art that various changes may be made in form and detail without departing from the overall scope of the disclosure, including the appended claims and their equivalents. For example, the lens assembly (e.g., the camera module 405 of FIG. 6 or the lens assembly 500 of FIG. 7) of the above-described embodiments may further include an additional lens (group) disposed between the third lens group G3 and the image sensor IS.

**Claims**

1. A lens assembly (500; 600; 700; 800), comprising:

   an image sensor (IS);
   a first lens group (G1) disposed first from a object-side among three lens groups (G1, G2, G3) sequentially arranged from the object-side to the image sensor-side along an optical-axis (O-I) direction, the first lens group including a plurality of lenses and having a negative refractive power;
   a second lens group (G2) configured to move back and forth along the optical-axis direction between the first lens group among the three lens groups and the image sensor, the second lens group including a plurality of lenses and having a positive refractive power; and
   a third lens group (G3) disposed between the second lens group among the three lens groups and the image sensor, the third lens group (G3) having a positive refractive power, wherein, when the lens assembly is in a zooming operation, the lens assembly is configured such that an gap between the first lens group and the second lens group is reduced, and a position of the third lens group is fixed, and
   wherein the lens assembly is configured to satisfy Formula 1:

   [Formula 1]

   $$-1.9 < \frac{f1G}{fw} < -1.1$$

   wherein 'f1G' is a total focal length of the first lens group, and 'fw' is a total composite focal length of the lens assembly at a wide-angle zoom.

2. The lens assembly of claim 1, wherein the gap between the first lens group (G1) and the second lens group (G2) is reduced as the first lens group (G1) and the second lens group (G2) move back and forth in the zooming operation.

3. The lens assembly of claim 2, wherein in a state between the wide-angle zoom and a telephoto zoom of the zooming operation, the first lens group (G1) moves by a predetermined distance in a first direction toward the second lens group (G2) along the optical-axis direction and then moves in a second direction away from the second lens group (G2) along the optical-axis direction, and the second lens group (G2) continuously moves toward the first lens group along the optical-axis direction.

4. The lens assembly of any one of claims 1 to 3, wherein in the first lens group (G1), a lens (L11) disposed first from the object-side has a positive refractive power, and a lens (L12; L13) disposed first from the image sensor-side has a negative refractive power.

5. The lens assembly of any one of claims 1 to 3, wherein in the first lens group (G1), a lens (L11) disposed first from the object-side has a negative refractive power, and a lens (L12) disposed first from the image sensor-side has a positive refractive power.

6. The lens assembly of any one of claims 1 to 5, wherein a focus adjustment operation is performed using the first lens group (G1).

7. The lens assembly of any one of claims 1 to 6, wherein the first lens group (G1) includes a glass lens.

8. The lens assembly of any one of claims 1 to 7, wherein the second lens group (G2) satisfys Formula 2:

[Formula 2]

$$0.5 \leq \frac{f2G}{\sqrt{fw+ft}} \leq 0.8$$

wherein 'f2G' is a total focal length of the second lens group (G2), 'fw' is a total composite focal length of the lens assembly (500; 600; 700; 800) at a wide-angle zoom, and 'ft' is a total composite focal length of the lens assembly (500; 600; 700; 800) at a telephoto zoom.

9. The lens assembly of any one of claims 1 to 8, wherein in the second lens group (G2), a first lens (e.g., L23; L24) from the image sensor-side has a positive refractive power.

10. The lens assembly of any one of claims 1 to 9, wherein any one of the first lens group (G1) and the second lens group (G2) has an effective diameter satisfying Formula 3:

[Formula 3]

$$0.4 \leq \frac{Dy}{Dx} \leq 0.98$$

wherein Dy is an effective diameter length of a short side of an aperture or a lens, and Dx is an effective diameter length of a long side of the aperture or the lens.

11. The lens assembly of any one of claims 1 to 10, wherein the second lens group (G2) includes a glass lens.

12. The lens assembly of any one of claims 1 to 11, wherein a reflective member (R) is disposed on the object-side of the first lens group (G1).

13. The lens assembly of any one of claims 1 to 12, wherein the reflective member (R) performs an image stabilization function.

14. The lens assembly of any one of claims 1 to 13, wherein the lens assembly constitutes a refractive optical system having an optical axis substantially perpendicular to an incident direction of light.

15. The lens assembly of any one of claims 1 to 14, wherein the lens assembly constitutes a telephoto camera whose magnification is adjustable within an angle of view of 40 degrees or less.

FIG. 1

FIG. 2

FIG. 3

300

320

330

310

311

340

350

360

370

380

Z

Y

X

# FIG. 4

FIG. 5

FIG. 6

# FIG. 7

FIG. 8

LONGITUDINAL
SPHERICAL ABER.

FIG. 9A

ASTIGMATIC
FIELD CURVES

IMG HT

DISTORTION

IMG HT

FIG. 9B     FIG. 9C

LONGITUDINAL
SPHERICAL ABER.

| | 656.2700 NM |
| --- | --- |
| | 587.5600 NM |
| | 486.1300 NM |

FOCUS (MILLIMETERS)

FIG. 10A

ASTIGMATIC
FIELD CURVES
IMG HT

S T 2.80

2.10

1.40

0.70

-0.100  -0.050   0.0   0.050   0.100
FOCUS (MILLIMETERS)

FIG. 10B

DISTORTION
IMG HT

2.80

2.10

1.40

0.70

-5.0   -2.5   0.0   2.5   5.0
% DISTORTION

FIG. 10C

LONGITUDINAL
SPHERICAL ABER.

FIG. 11A

ASTIGMATIC
FIELD CURVES

IMG HT

2.80 S
       T

2.10

1.40

0.70

-0.100 -0.050  0.0  0.050  0.100

FOCUS (MILLIMETERS)

## FIG. 11B

DISTORTION

IMG HT

2.80

2.10

1.40

0.70

-5.0  -2.5  0.0  2.5  5.0

% DISTORTION

## FIG. 11C

FIG. 12

LONGITUDINAL
SPHERICAL ABER.

FIG. 13A

ASTIGMATIC
FIELD CURVES

IMG HT

T S

2.80

2.10

1.40

0.70

-0.100 -0.050 0.0 0.050 0.100

FOCUS (MILLIMETERS)

FIG. 13B

DISTORTION

IMG HT

2.80

2.10

1.40

0.70

-5.0 -2.5 0.0 2.5 5.0

% DISTORTION

FIG. 13C

LONGITUDINAL
SPHERICAL ABER.

FIG. 14A

ASTIGMATIC
FIELD CURVES

DISTORTION

IMG HT

IMG HT

S T

2.80

2.80

2.10

2.10

1.40

1.40

0.70

0.70

-0.100  -0.050   0.0    0.050   0.100

-5.0    -2.5    0.0    2.5    5.0

FOCUS (MILLIMETERS)

% DISTORTION

# FIG. 14B

# FIG. 14C

LONGITUDINAL
SPHERICAL ABER.

|  | 656.2700 NM |
|---|---|
|  | 587.5600 NM |
|  | 486.1300 NM |

FOCUS (MILLIMETERS)

# FIG. 15A

ASTIGMATIC
FIELD CURVES

IMG HT

S       T

2.80

2.10

1.40

0.70

-0.100  -0.050   0.0    0.050   0.100

FOCUS (MILLIMETERS)

## FIG. 15B

DISTORTION

IMG HT

2.80

2.10

1.40

0.70

-5.0    -2.5    0.0     2.5    5.0

% DISTORTION

## FIG. 15C

FIG. 16

LONGITUDINAL
SPHERICAL ABER.

FIG. 17A

ASTIGMATIC
FIELD CURVES

DISTORTION

IMG HT

IMG HT

S T 2.55

2.55

1.92

1.92

1.28

1.28

0.64

0.64

-0.100 -0.050 0.0 0.050 0.100

-5.0 -2.5 0.0 2.5 5.0

FOCUS (MILLIMETERS)

% DISTORTION

FIG. 17B

FIG. 17C

LONGITUDINAL
SPHERICAL ABER.

| | 656.2700 NM |
| --- | --- |
| | 587.5600 NM |
| | 486.1300 NM |

FOCUS (MILLIMETERS)

FIG. 18A

ASTIGMATIC
FIELD CURVES

DISTORTION

IMG HT

IMG HT

T   S

2.55

2.55

1.92

1.92

1.28

1.28

0.64

0.64

-0.100 -0.050  0.0  0.050  0.100

-5.0  -2.5  0.0  2.5  5.0

FOCUS (MILLIMETERS)

% DISTORTION

FIG. 18B

FIG. 18C

LONGITUDINAL
SPHERICAL ABER.

FIG. 19A

ASTIGMATIC
FIELD CURVES

IMG HT

S T  2.55

1.92

1.28

0.64

-0.100  -0.050   0.0    0.050   0.100

FOCUS (MILLIMETERS)

## FIG. 19B

DISTORTION

IMG HT

2.55

1.92

1.28

0.64

-5.0   -2.5    0.0    2.5    5.0

% DISTORTION

## FIG. 19C

FIG. 20

LONGITUDINAL
SPHERICAL ABER.

| | |
|---|---|
| - - - - - | 656.2700 NM |
| ——— | 587.5600 NM |
| ·········· | 486.1300 NM |

FOCUS (MILLIMETERS)

FIG. 21A

ASTIGMATIC
FIELD CURVES

## FIG. 21B

DISTORTION

## FIG. 21C

LONGITUDINAL
SPHERICAL ABER.

FIG. 22A

ASTIGMATIC
FIELD CURVES

S    T    IMG HT
2.80

2.10

1.40

0.70

-0.100  -0.050   0.0   0.050   0.100
FOCUS (MILLIMETERS)

FIG. 22B

DISTORTION

IMG HT
2.80

2.10

1.40

0.70

-5.0   -2.5   0.0   2.5   5.0
% DISTORTION

FIG. 22C

LONGITUDINAL
SPHERICAL ABER.

FIG. 23A

ASTIGMATIC
FIELD CURVES

T IMG HT

S

2.80

2.10

1.40

0.70

-0.100  -0.050   0.0    0.050   0.100

FOCUS (MILLIMETERS)

FIG. 23B

DISTORTION

IMG HT

2.80

2.10

1.40

0.70

-5.0    -2.5    0.0    2.5    5.0

% DISTORTION

FIG. 23C

## INTERNATIONAL SEARCH REPORT

| International application No. |
| --- |
| **PCT/KR2023/016071** |

### A. CLASSIFICATION OF SUBJECT MATTER

**G02B 15/14**(2006.01)i; **G02B 13/00**(2006.01)i; **G02B 13/18**(2006.01)i

According to International Patent Classification (IPC) or to both national classification and IPC

### B. FIELDS SEARCHED

Minimum documentation searched (classification system followed by classification symbols)

G02B 15/14(2006.01); G02B 13/00(2006.01); G02B 13/02(2006.01); G02B 13/18(2006.01); G02B 15/20(2006.01); G02B 27/64(2006.01); G02B 3/00(2006.01); G02B 7/02(2006.01); G02B 9/34(2006.01); G03B 17/12(2006.01)

Documentation searched other than minimum documentation to the extent that such documents are included in the fields searched

Korean utility models and applications for utility models: IPC as above
Japanese utility models and applications for utility models: IPC as above

Electronic data base consulted during the international search (name of data base and, where practicable, search terms used)

eKOMPASS (KIPO internal) & keywords: 제1렌즈군(first lens group), 제2렌즈군(second lens group), 제3렌즈군(third lens group), 주밍(zooming), 렌즈 어셈블리(lens assembly)

### C. DOCUMENTS CONSIDERED TO BE RELEVANT

| Category* | Citation of document, with indication, where appropriate, of the relevant passages | Relevant to claim No. |
| --- | --- | --- |
| Y | KR 10-2021-0027187 A (SAMSUNG ELECTRO-MECHANICS CO., LTD.) 10 March 2021 (2021-03-10)<br>See paragraphs [0179]-[0388]; and figures 3, 5, 9 and 17. | 1-15 |
| Y | KR 10-2014-0121709 A (SAMSUNG ELECTRONICS CO., LTD.) 16 October 2014 (2014-10-16)<br>See paragraphs [0045]-[0052]; and figure 1. | 1-15 |
| Y | KR 10-2022-0114408 A (SAMSUNG ELECTRONICS CO., LTD.) 17 August 2022 (2022-08-17)<br>See paragraphs [0035]-[0036] and [0240]; and figures 1 and 4a. | 7,11,13 |
| A | KR 10-2019-0032905 A (SAMSUNG ELECTRONICS CO., LTD.) 28 March 2019 (2019-03-28)<br>See paragraphs [0036]-[0214]; and figures 1-21. | 1-15 |
| A | JP 2018-049201 A (CANON INC.) 29 March 2018 (2018-03-29)<br>See claims 1-14; and figures 1-11. | 1-15 |

☐ Further documents are listed in the continuation of Box C.  ☑ See patent family annex.

| | |
| --- | --- |
| * Special categories of cited documents:<br>"A" document defining the general state of the art which is not considered to be of particular relevance<br>"D" document cited by the applicant in the international application<br>"E" earlier application or patent but published on or after the international filing date<br>"L" document which may throw doubts on priority claim(s) or which is cited to establish the publication date of another citation or other special reason (as specified)<br>"O" document referring to an oral disclosure, use, exhibition or other means<br>"P" document published prior to the international filing date but later than the priority date claimed | "T" later document published after the international filing date or priority date and not in conflict with the application but cited to understand the principle or theory underlying the invention<br>"X" document of particular relevance; the claimed invention cannot be considered novel or cannot be considered to involve an inventive step when the document is taken alone<br>"Y" document of particular relevance; the claimed invention cannot be considered to involve an inventive step when the document is combined with one or more other such documents, such combination being obvious to a person skilled in the art<br>"&" document member of the same patent family |

| Date of the actual completion of the international search | Date of mailing of the international search report |
| --- | --- |
| **24 January 2024** | **24 January 2024** |

| Name and mailing address of the ISA/KR | Authorized officer |
| --- | --- |
| **Korean Intellectual Property Office**<br>**Government Complex-Daejeon Building 4, 189 Cheongsa-ro, Seo-gu, Daejeon 35208** | |
| Facsimile No. **+82-42-481-8578** | Telephone No. |

Form PCT/ISA/210 (second sheet) (July 2022)

## INTERNATIONAL SEARCH REPORT
### Information on patent family members

International application No.

**PCT/KR2023/016071**

| Patent document cited in search report | | | Publication date (day/month/year) | Patent family member(s) | | | Publication date (day/month/year) |
|---|---|---|---|---|---|---|---|
| KR | 10-2021-0027187 | A | 10 March 2021 | CN | 112444950 | A | 05 March 2021 |
| | | | | CN | 112444950 | B | 10 March 2023 |
| | | | | CN | 115933147 | A | 07 April 2023 |
| | | | | CN | 116047735 | A | 02 May 2023 |
| | | | | CN | 212905675 | U | 06 April 2021 |
| | | | | KR | 10-2022-0100843 | A | 18 July 2022 |
| | | | | KR | 10-2023-0142691 | A | 11 October 2023 |
| | | | | KR | 10-2434016 | B1 | 22 August 2022 |
| | | | | KR | 10-2587125 | B1 | 11 October 2023 |
| | | | | TW | 202121039 | A | 01 June 2021 |
| | | | | TW | 202242524 | A | 01 November 2022 |
| | | | | TW | I769512 | B | 01 July 2022 |
| | | | | US | 11803034 | B2 | 31 October 2023 |
| | | | | US | 2021-0063704 | A1 | 04 March 2021 |
| | | | | US | 2023-0108823 | A1 | 06 April 2023 |
| KR | 10-2014-0121709 | A | 16 October 2014 | KR | 10-1941249 | B1 | 22 January 2019 |
| | | | | US | 2014-0300804 | A1 | 09 October 2014 |
| | | | | US | 9042038 | B2 | 26 May 2015 |
| KR | 10-2022-0114408 | A | 17 August 2022 | CN | 116830006 | A | 29 September 2023 |
| | | | | EP | 4206780 | A1 | 05 July 2023 |
| | | | | US | 2022-0269048 | A1 | 25 August 2022 |
| | | | | WO | 2022-169332 | A1 | 11 August 2022 |
| KR | 10-2019-0032905 | A | 28 March 2019 | CN | 111133357 | A | 08 May 2020 |
| | | | | CN | 111133357 | B | 08 July 2022 |
| | | | | EP | 3662314 | A1 | 10 June 2020 |
| | | | | EP | 3662314 | A4 | 05 August 2020 |
| | | | | EP | 3662314 | B1 | 24 August 2022 |
| | | | | KR | 10-2449876 | B1 | 30 September 2022 |
| | | | | US | 10908387 | B2 | 02 February 2021 |
| | | | | US | 2019-0086638 | A1 | 21 March 2019 |
| | | | | WO | 2019-059610 | A1 | 28 March 2019 |
| JP | 2018-049201 | A | 29 March 2018 | None | | | |

Form PCT/ISA/210 (patent family annex) (July 2022)